# EUROPEAN PATENT APPLICATION

(11) **EP 4 535 803 A1**
(43) Date of publication of application: **09.04.2025**
(21) Application number: 23811168.6
(22) Date of filing: 26.05.2023
(51) Int. Cl.: H04N 23/00

(54) **CAMERA**

(30) Priority: 27.05.2022 CN 202210594729
(71) Applicant: Hangzhou Hikvision Digital Technology Co., Ltd., Hangzhou, Zhejiang 310051 (CN)
(72) Inventor: BU, Xuegang, Hangzhou, Zhejiang 310051 (CN); LU, Lingfeng, Hangzhou, Zhejiang 310051 (CN); YU, Xuehai, Hangzhou, Zhejiang 310051 (CN); LI, Yang, Hangzhou, Zhejiang 310051 (CN); YAN, Caisheng, Hangzhou, Zhejiang 310051 (CN)
(74) Representative: Dai, Simin
(86) International application number: PCT/CN2023/096481
(87) International publication number: WO 2023/227098

(57) **Abstract**

A camera, comprising a T-shaped camera body, a base assembly, a first lens assembly and a second lens assembly. The T-shaped camera body comprises a horizontal portion and a vertical portion; the base assembly supports the vertical portion; a first horizontal transmission assembly and a second horizontal transmission assembly are symmetrically arranged in a cavity of the horizontal portion; under the horizontal transmission force of the first horizontal transmission assembly, the first lens assembly rotates relative to the camera body parallel to the axis of the vertical portion; and under the horizontal transmission force of the second horizontal transmission assembly, the second lens assembly rotates relative to the body parallel to the axis of the vertical portion. A first lens and a first vertical transmission assembly are arranged inside a first lens housing. A second lens and a second vertical transmission assembly are arranged inside a second lens housing. Under the vertical transmission force of the first vertical transmission assembly, the first lens pitches relative to the first lens housing and the T-shaped camera body; and under the vertical transmission force of the second vertical transmission assembly, the second lens pitches relative to the second lens housing and the T-shaped camera body.

## Description

### TECHNICAL FIELD

The present application relates to the field of monitoring equipment technologies, and in particular, to a camera.

### BACKGROUND

With increasing demands for intelligent and multifunctional cameras, forms of cameras are ever increasing. Requirements for cameras are also increasing. Vertical rotation and horizontal rotation of cameras in related art affect each other, causing image skew.

### SUMMARY

The present application provides a camera that independently implements horizontal rotation and vertical rotation of a lens assembly.

The present application provides a camera, including a T-shaped camera body, a base assembly, a first lens assembly and a second lens assembly. The T-shaped camera body includes a horizontal portion and a vertical portion. The base assembly supports the vertical portion, so that the camera can be horizontally mounted in a monitoring region. The first lens assembly and the second lens assembly hang below and are connected with the horizontal portion, and are symmetrically distributed on both sides of the base assembly. The horizontal portion includes a cavity transversely extending, and a first horizontal transmission assembly and a second horizontal transmission assembly are symmetrically provided in the cavity. Under a horizontal transmission force generated by the first horizontal transmission assembly, the first lens assembly can rotate horizontally about an axis parallel to the vertical portion relative to the T-shaped camera body, and under a horizontal transmission force generated by the second horizontal transmission assembly, the second lens assembly can rotate horizontally about an axis parallel to the vertical portion relative to the T-shaped camera body. The first lens assembly includes a first lens housing, and a first lens and a first vertical transmission assembly are provided in a common cavity in the first lens housing in a cavity-sharing manner. The second lens assembly includes a second lens housing, and a second lens and a second vertical transmission assembly are provided in the second lens housing in a cavity-sharing manner. Under a vertical transmission force generated by the first vertical transmission assembly, the first lens can pitch relative to the first lens housing and the T-shaped camera body, and under a vertical transmission force generated by the second vertical transmission assembly, the second lens can pitch relative to the second lens housing and the T-shaped camera body.

The camera according to the embodiments of the present application can independently implement horizontal rotation and vertical rotation of the lens assembly without interference to each other, avoiding image skew and improving image quality.

### BRIEF DESCRIPTION OF DRAWINGS

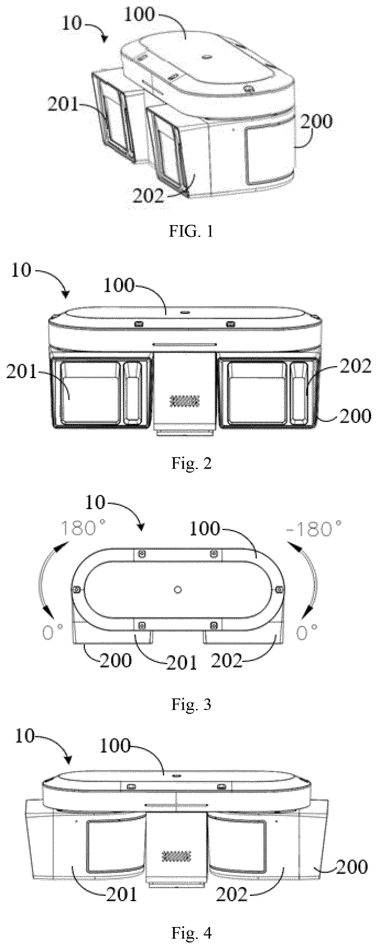

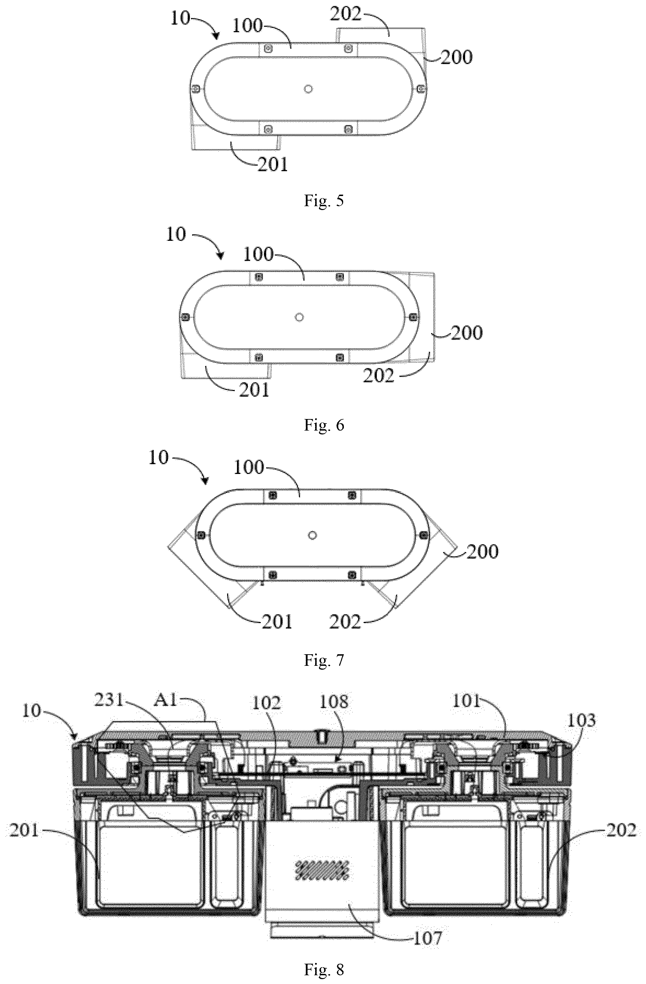

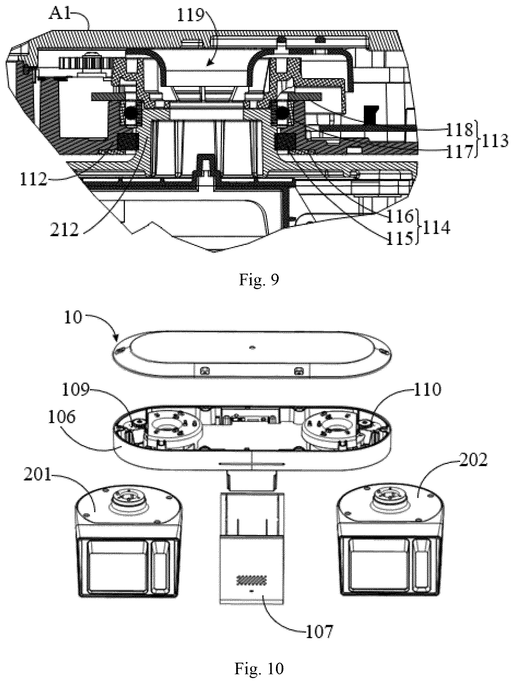

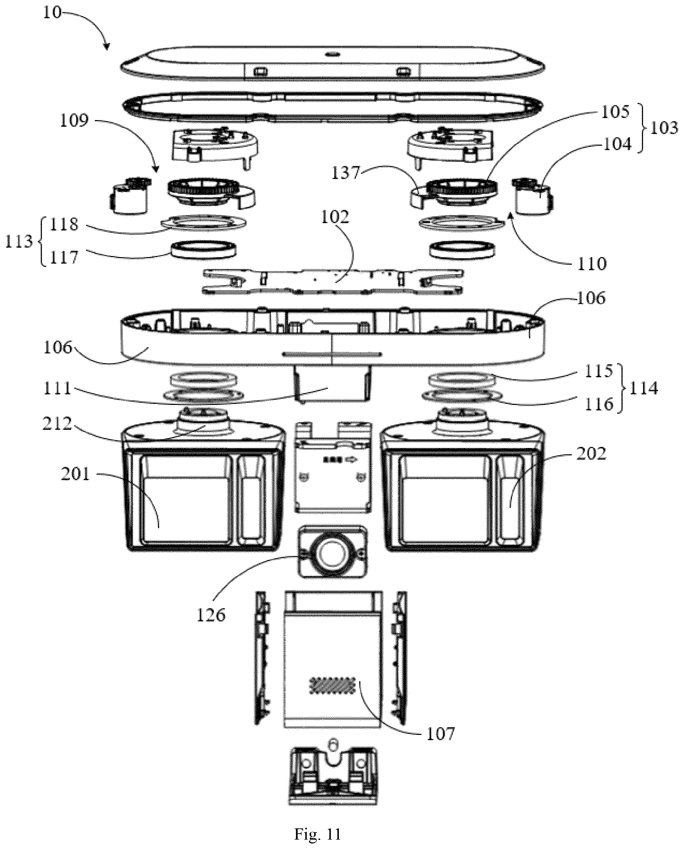

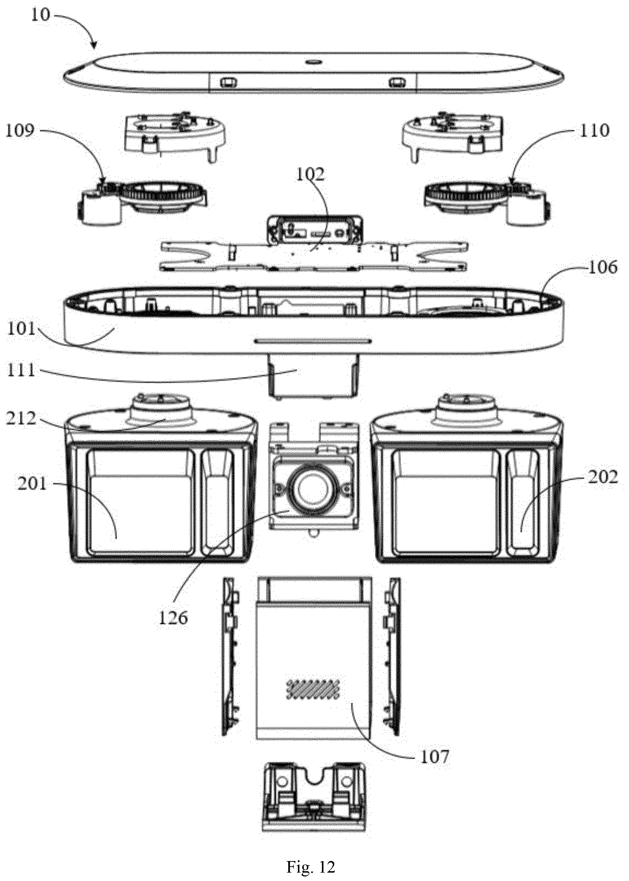

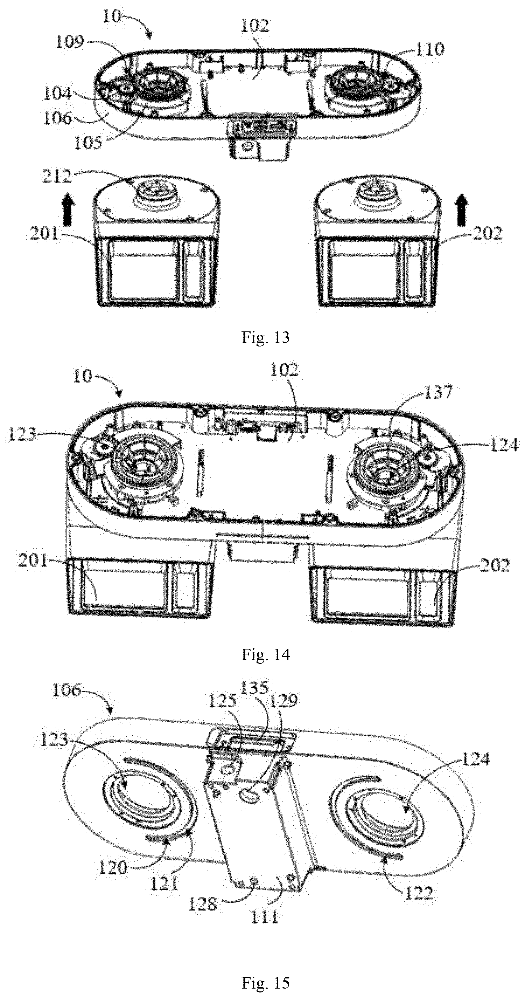

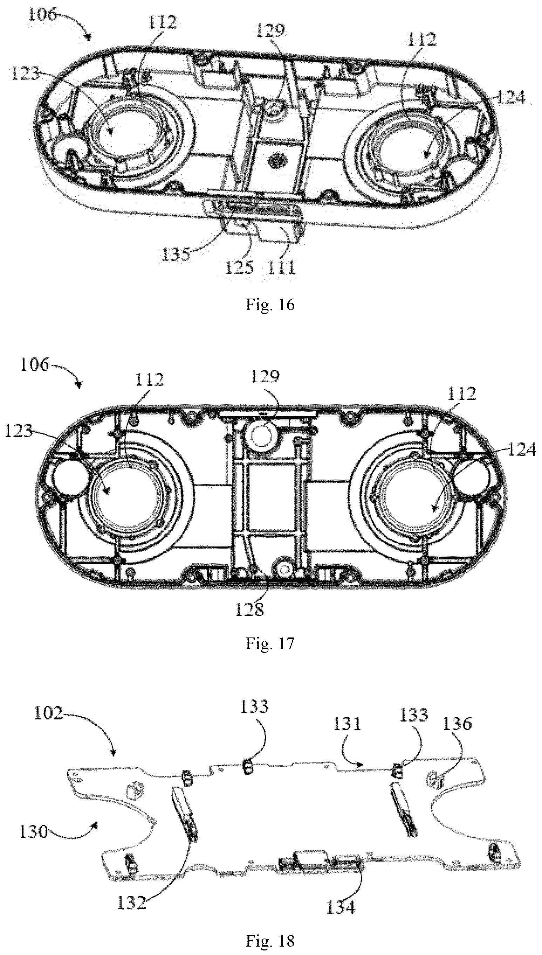

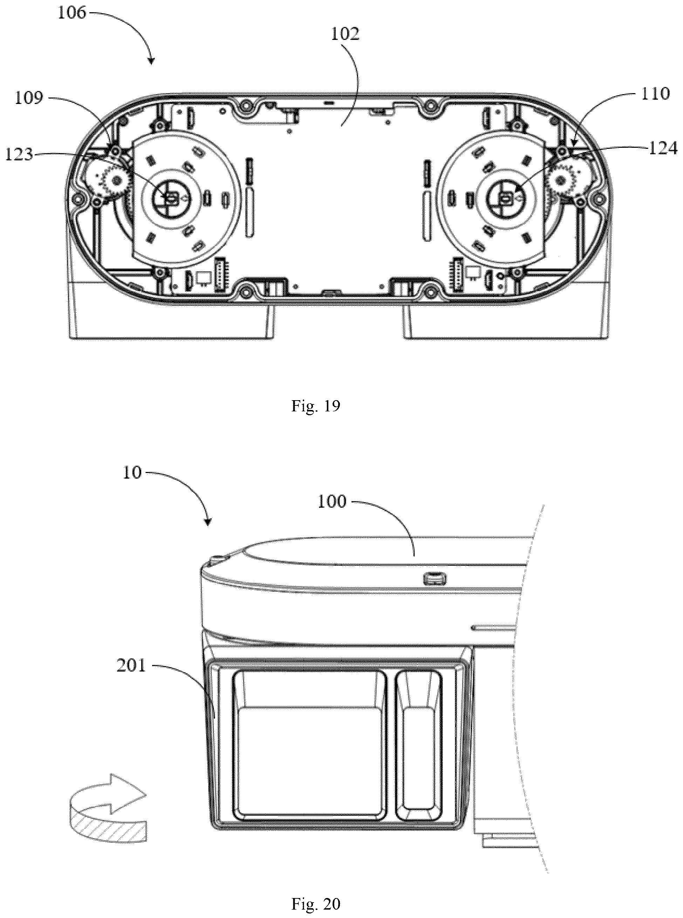

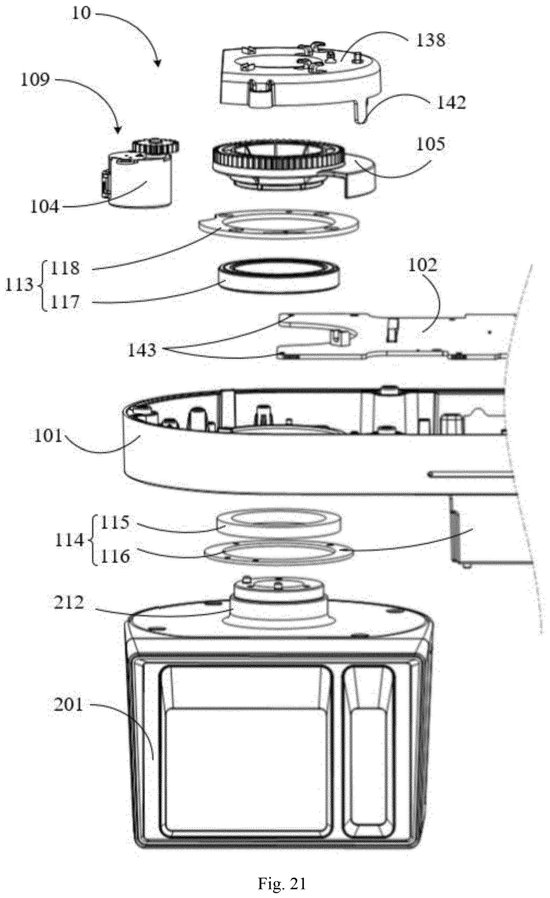

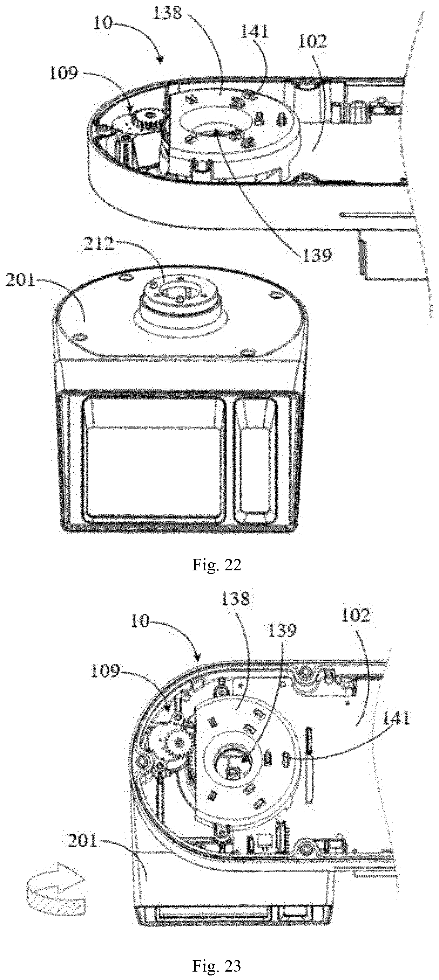

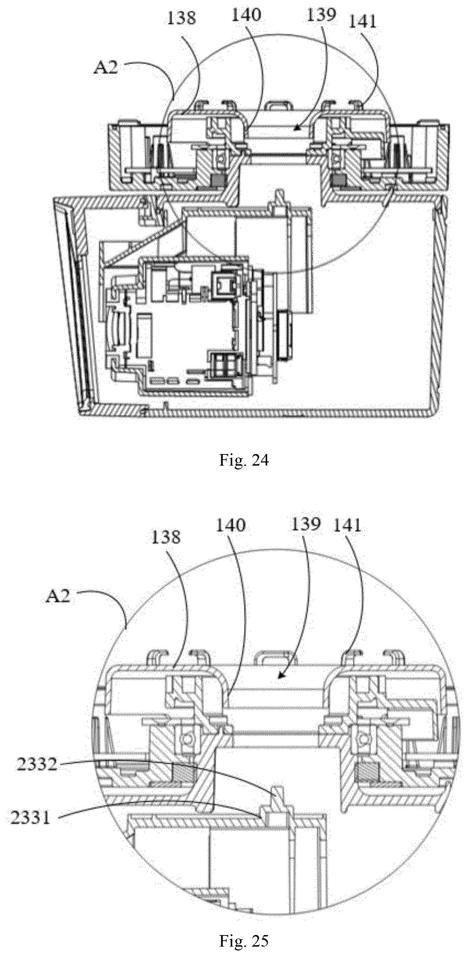

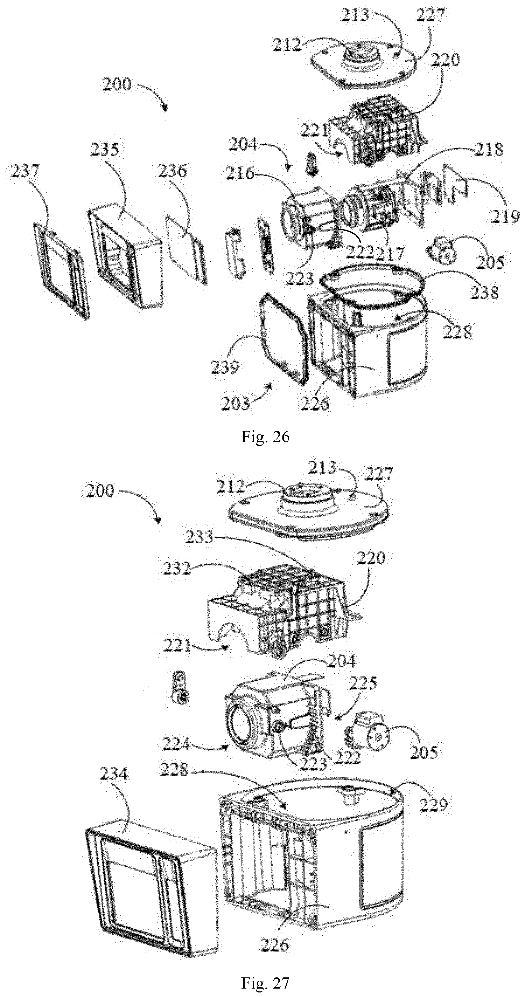

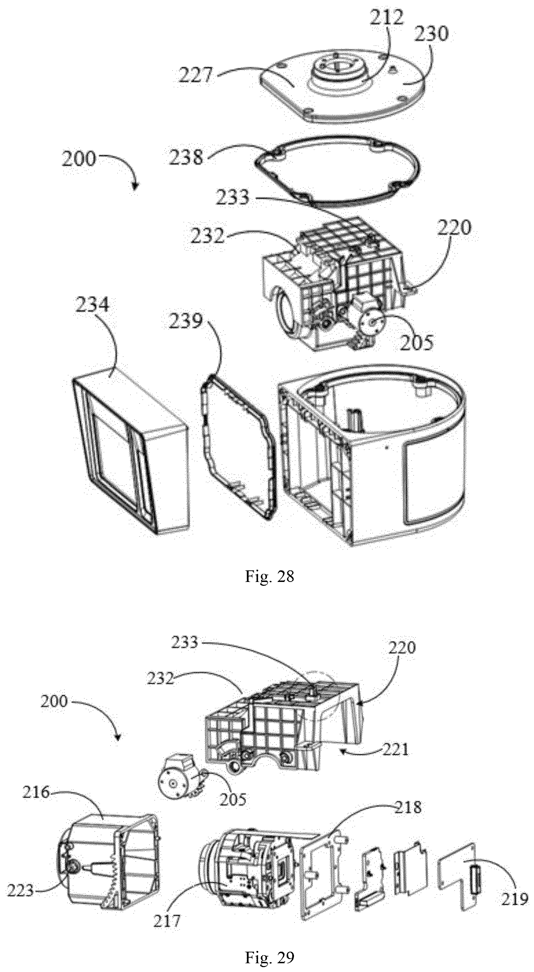

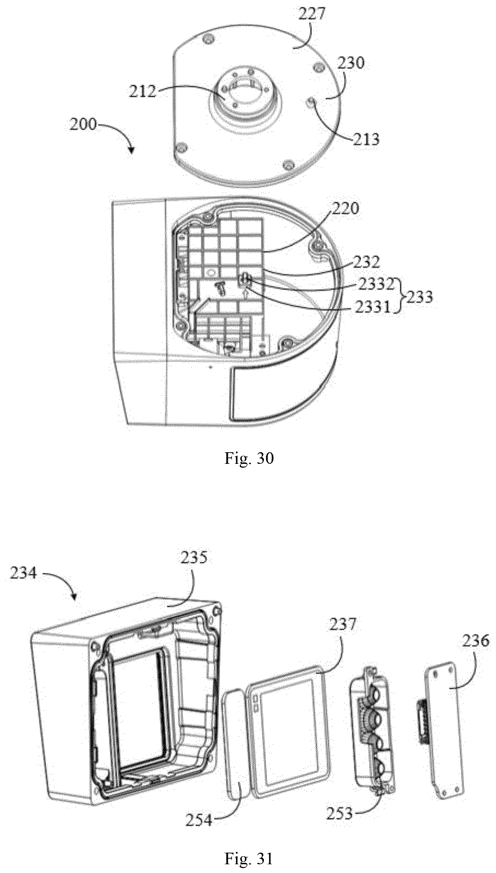

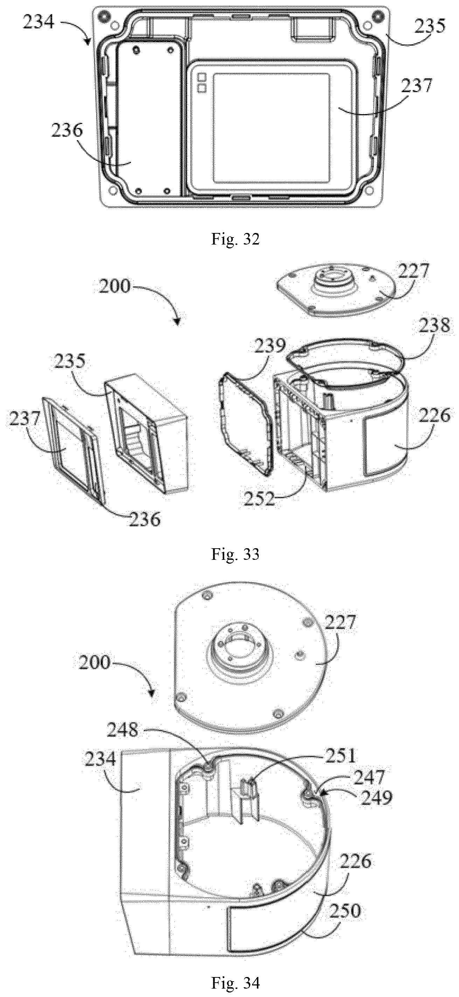

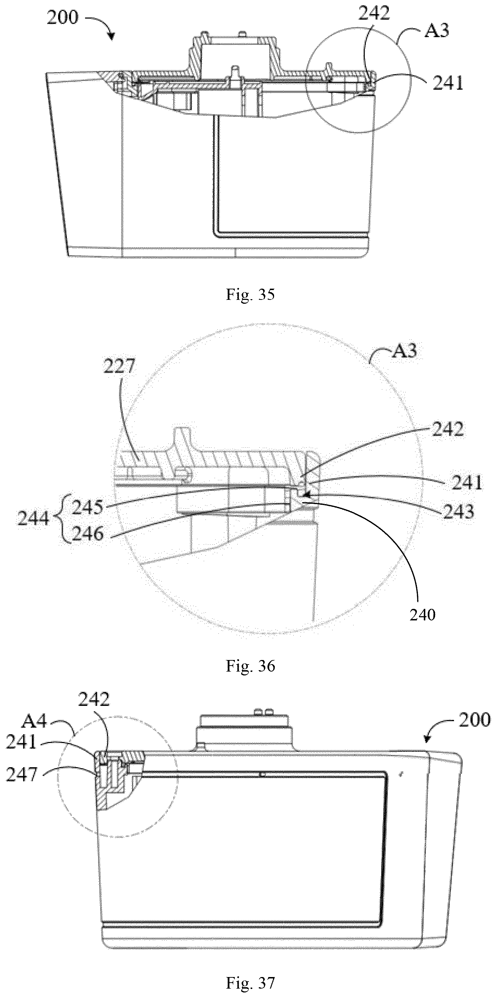

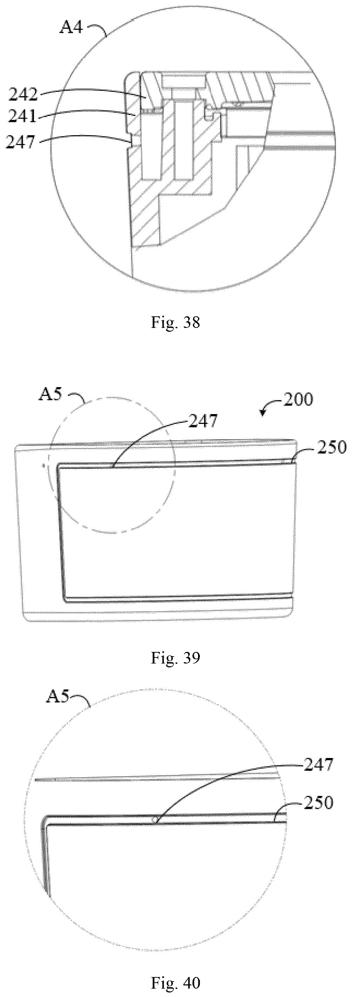

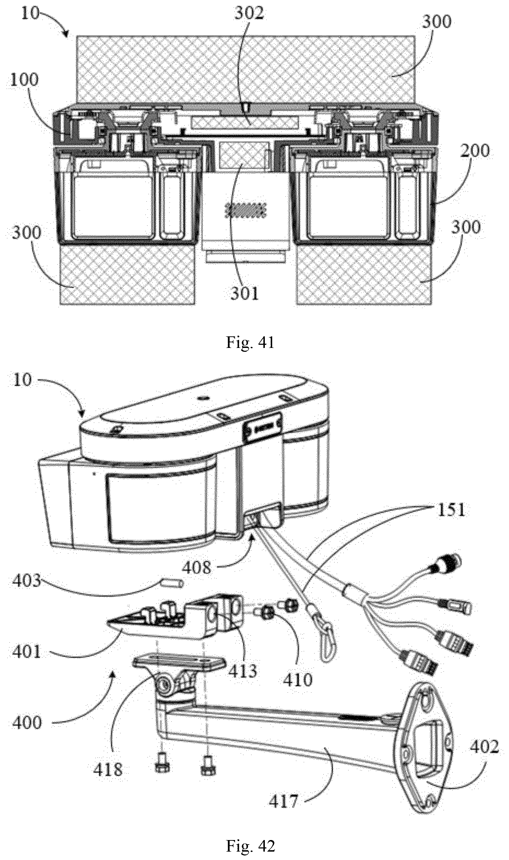

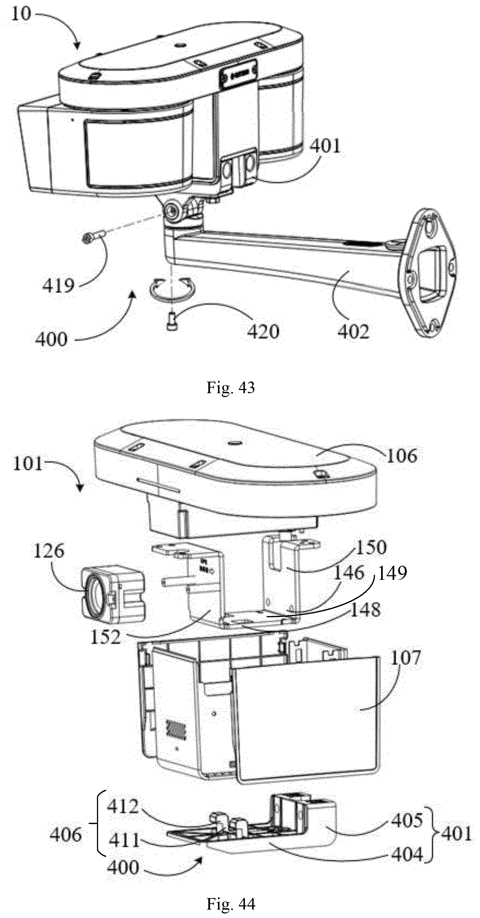

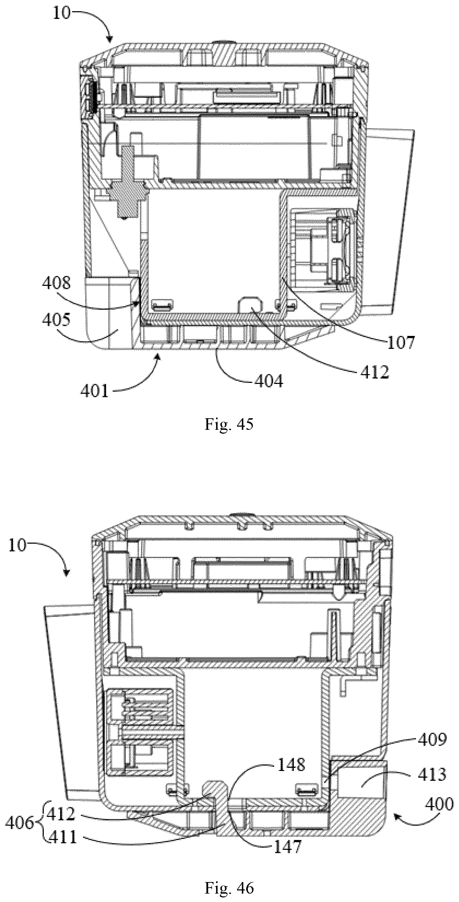

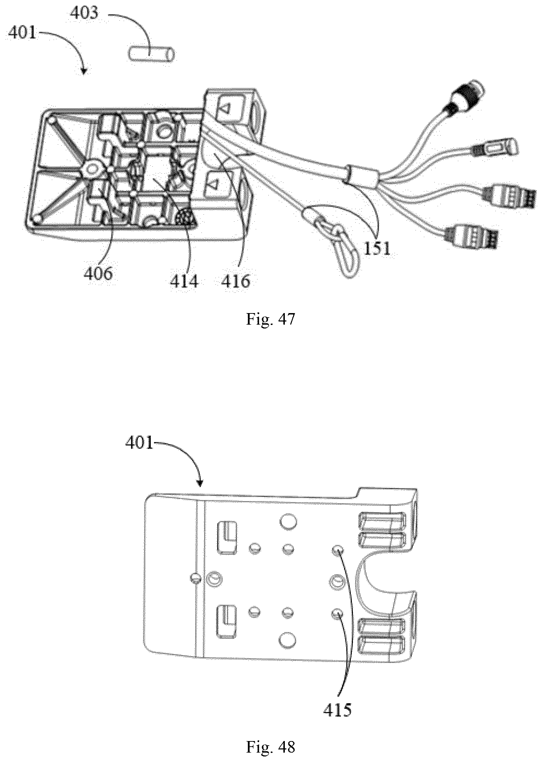

FIG. 1 is a schematic diagram showing a structure of a camera according to an example of the present application. FIG. 2 is a schematic diagram showing a structure of the camera in FIG. 1 from another angle of view. FIG. 3 is a schematic diagram showing a structure of the camera in FIG. 1 from another angle of view. FIG. 4 is a schematic diagram showing a structure of the camera in FIG. 1 at an initial position. FIG. 5 is a schematic diagram showing a structure of the camera in FIG. 1 at a shooting angle. FIG. 6 is a schematic diagram showing a structure of the camera in FIG. 1 at another shooting angle. FIG. 7 is a schematic diagram showing a structure of the camera in FIG. 1 at yet another shooting angle. FIG. 8 is a schematic view showing a cross-section of the camera in FIG. 1. FIG. 9 is an enlarged view showing a portion of the camera in FIG. 8 at A1. FIG. 10 is an exploded view showing the camera in FIG. 1. FIG. 11 is an exploded view showing the camera in FIG. 1. FIG. 12 is an exploded view showing the camera in FIG. 1. FIG. 13 is a schematic diagram showing a partial structure of the camera in FIG. 1. FIG. 14 is a perspective view showing the portion of the camera in FIG. 13 assembled. FIG. 15 is a schematic diagram showing a structure of a housing body of the camera in FIG. 1. FIG. 16 is a schematic diagram showing a structure of the housing body of the camera in FIG. 15. FIG. 17 is a schematic diagram showing a structure of the housing body of the camera in FIG. 15. FIG. 18 is a schematic diagram showing a structure of a main control board of the camera in FIG. 1. FIG. 19 is a schematic diagram showing a partial structure of a camera body of the camera in FIG. 1. FIG. 20 is a schematic diagram showing a partial structure of the camera in FIG. 1. FIG. 21 is an exploded view showing the camera in FIG. 20. FIG. 22 is a schematic diagram showing a partial structure of the camera in FIG. 20. FIG. 23 is a schematic diagram showing a partial structure of the camera in FIG. 20. FIG. 24 is a schematic view showing a cross-section of the camera in FIG. 1. FIG. 25 is an enlarged view showing a portion of the camera in FIG. 24 at A2. FIG. 26 is a schematic diagram showing a structure of a lens assembly of the camera in FIG. 1. FIG. 27 is a schematic diagram showing a partial structure of the camera in FIG. 26. FIG. 28 is a schematic diagram showing a partial structure of the camera in FIG. 26. FIG. 29 is a schematic diagram showing a partial structure of a lens assembly of the camera in FIG. 26. FIG. 30 is a schematic diagram showing a partial structure of a lens assembly of the camera in FIG. 1. FIG. 31 is a schematic diagram showing a partial structure of a front housing assembly of the camera in FIG. 1. FIG. 32 is a schematic diagram showing a structure of a front housing assembly of the camera in FIG. 30. FIG. 33 is a schematic diagram showing a partial structure of a lens assembly of the camera in FIG. 1. FIG. 34 is a schematic diagram showing a partial structure of a lens assembly of the camera in FIG. 1. FIG. 35 is a schematic view showing an assembled structure of the camera in FIG. 34. FIG. 36 is an enlarged view showing a portion of the camera in FIG. 35 at A3. FIG. 37 is a schematic view showing an assembled structure of the camera in FIG. 34. FIG. 38 is an enlarged view showing a portion of the camera in FIG. 37 at A4. FIG. 39 is a schematic view showing an assembled structure of the camera in FIG. 1. FIG. 40 is an enlarged view showing a portion of the camera in FIG. 39 at A5. FIG. 41 is a schematic diagram showing a structure of the camera in FIG. 1. FIG. 42 is a schematic view showing an unassembled structure of the camera in FIG. 1. FIG. 43 is a schematic view showing an assembled structure of the camera in FIG. 42. FIG. 44 is a schematic diagram showing a partial structure of a camera body of the camera in FIG. 1. FIG. 45 is a schematic view showing a partial cross-section of the camera in FIG. 1. FIG. 46 is a schematic view showing a partial cross-section of the camera in FIG. 1. FIG. 47 is a schematic diagram showing a structure of a mounting base of the camera in FIG. 42. FIG. 48 is a schematic diagram showing a structure of a mounting base of the camera in FIG. 42.

### DETAILED DESCRIPTION

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present application. Rather, they are merely examples of apparatuses and methods consistent with some aspects of the present application as detailed in the appended claims.

The terms used in the present application are for the purpose of describing particular embodiments only, and are not intended to limit the present application. Unless otherwise defined, technical or scientific terms used in the present application should have ordinary meaning as understood by one of ordinary skill in the art to which the present application belongs. "First", "second" and similar words used in the specification and claims of the present application do not represent any order, quantity or importance, but are used only to distinguish different components. Likewise, similar words such as "one", "a" or "an" do not represent a quantity limit, but represent that there is at least one. "Plurality", "multiple" or "several" means at least two. Unless otherwise indicated, similar words such as "front", "rear", "lower" and/or "upper" are only for convenience of description, and are not limited to one position or one spatial orientation. Similar words such as "including" or "comprising" mean that an element or an item appearing before "including" or "comprising" covers elements or items and their equivalents listed after "including" or "comprising", without excluding other elements or items. Similar words such as "connect" or "connected with each other" are not limited to physical or mechanical connections, and may include electrical connections, whether direct or indirect. Terms determined by "a/an", "the" and "said" in their singular forms in the specification and the appended claims of the present application are also intended to include plural forms unless clearly indicated otherwise in the context. It should also be understood that the term "and/or" as used herein refers to and includes any or all possible combinations of one or more associated listed items.

The present application provides a camera. The camera in the present application will be described in detail below with reference to the accompanying drawings. Features in the following examples and implementations may be combined with each other in case of no conflict.

As shown in FIG. 1 to FIG. 7, a camera 10 includes a camera body 100 and a lens assembly 200. The lens assembly 200 is longitudinally located below the camera body 100. The lens assembly 200 is rotatably assembled below the camera body 100. A plurality of lens assemblies 200 may be provided. The plurality of lens assemblies 200 are assembled below the camera body 100 and are transversely and horizontally rotatable. The plurality of lens assemblies 200 can independently rotate. As shown in FIG. 2 and FIG. 3, the lens assembly 200 is at 0° in a forward position, and the lens assembly 200, if rotating counterclockwise horizontally, is at a negative angle, and if rotating clockwise horizontally, is at a positive angle. The lens assembly 200 may be adjusted in a range of 0~180°horizontally relative to the camera body 100. In the embodiments, the camera body 100 is a T-shaped camera body 100, and includes a horizontal portion and a vertical portion. The horizontal portion laterally extends, and the vertical portion vertically extends. In the embodiments, the plurality of lens assemblies 200 include a first lens assembly 201 and a second lens assembly 202, which are respectively arranged on left and right sides of the vertical portion. The first lens assembly 201 and the second lens assembly 202 may rotate by different angles horizontally relative to the vertical portion, presenting for example, a "-" shape (as shown in FIG. 4), a "T" shape (as shown in FIG. 5 and FIG. 6), or a "V/Y" shape (as shown in FIG. 7), which meets a requirement for capturing images of a general road section in different directions, and flexibly adapts to scenes such as various channel-type road sections and complex intersections, so that images associated with incoming faces, human bodies, attributes, as well as outgoing faces, human bodies, and attributes can be acquired. The present application is not limited thereto.

As shown in FIG. 8 to FIG. 14, the camera body 100 includes a housing 101, and a main control board 102 and a horizontal transmission assembly 103 disposed in the housing 101. The horizontal transmission assembly 103 includes a horizontal motor 104 and a transmission gear 105. The horizontal motor 104 is in transmission connection with the transmission gear 105, and is located on a lateral side of the transmission gear 105. The horizontal motor 104 is located on a side of the main control board 102, and is electrically connected to the main control board 102. The transmission gear may be a horizontally rotating gear. Top portions of the plurality of lens assemblies 200 extend into the housing 101, and top ends of the plurality of lens assemblies 200 are rotatably connected to the housing 101. The top portions of the lens assemblies 200 are in transmission connection with the transmission gear 105, and the main control board 102 is configured to control and drive the horizontal motor 104 to rotate, so as to drive the lens assemblies 200 to horizontally rotate. In this way, the top portions of the lens assemblies 200 are embedded into the housing 101, so that a volume of the entire camera 10 is reduced. In some embodiments, the housing 101 horizontally extends. In some embodiments, the housing 101 includes a housing body 106 horizontally extending and an assembly housing 107 vertically extending. The assembly housing 107 is disposed below the housing body 106. The housing body 106 may be the horizontal portion. The assembly housing 107 may be the vertical portion. The plurality of lens assemblies 200 are assembled below the housing body 106, and are located on both sides of the assembly housing 107. The top portions of the plurality of lens assemblies 200 are connected to the same housing body 106, which simplifies structure. In some embodiments, the main control board is horizontally disposed in the camera body 100. In some embodiments, the main control board 102 is transversely mounted in the housing body 106. In some embodiments, the housing 101 includes a first receiving cavity 108 horizontally extending. The housing body 106 includes the first receiving cavity 108. The main control board 102, the horizontal motor 104, and the transmission gear 105 are located in the first receiving cavity 108. The first receiving cavity 108 is configured to receive the main control board 102, the horizontal motor 104, and the transmission gear 105. In some embodiments, the top portions of the plurality of lens assemblies 200 extend into the housing body 106, and the top ends thereof are located in the first receiving cavity 108, and are rotatably connected to the housing 101. The plurality of lens assemblies 200 are transversely located on both sides of the main control board 102, and are jointly connected to a single main control board 102. The plurality of lens assemblies 200 share one main control board 102, which can reduce the number of main control boards 102 and make the number of parts smaller.

In some embodiments, the plurality of lens assemblies 200 include a first lens assembly 201 and a second lens assembly 202, and the first lens assembly 201 and the second lens assembly 202 are respectively connected to the camera body 100. In some embodiments, the first lens assembly 201 and the second lens assembly 202 are in hoist connection with the horizontal portion. In some embodiments, top ends of the first lens assembly 201 and the second lens assembly 202 respectively extend into the housing body 106, and are in transmission connection with the horizontal transmission assembly 103. In some embodiments, the camera body 100 is provided with a first horizontal transmission assembly 109 and a second horizontal transmission assembly 110 in a cavity-sharing manner. The horizontal transmission assembly 103 includes the first horizontal transmission assembly 109 and the second horizontal transmission assembly 110. In some embodiments, the first horizontal transmission assembly 109, the second horizontal transmission assembly 110, and the main control board 102 are provided in the housing body 106 in a cavity-sharing manner. The first horizontal transmission assembly 109 and the second horizontal transmission assembly 110 are respectively disposed at both ends of the main control board 102, and are electrically connected to the main control board 102. The first lens assembly 201 is connected to the first horizontal transmission assembly 109, and may horizontally rotate under a driving force of the first horizontal transmission assembly 109. The second lens assembly 202 is connected to the second horizontal transmission assembly 110, and may horizontally rotate under a driving force of the second horizontal transmission assembly 110. In some embodiments, the horizontal portion includes a cavity transversely extending. The cavity may be a first receiving cavity 108, and the first receiving cavity 108 transversely extends. The first horizontal transmission assembly 109 and the second horizontal transmission assembly 110 are symmetrically provided in the cavity. Under horizontal transmission forces generated by the first horizontal transmission assembly 109 and the second horizontal transmission assembly 110, the first lens assembly 201 and the second lens assembly 202 may horizontally rotate relative to the T-shaped camera body 100 about an axis parallel to the vertical portion, so that the first lens assembly 201 and the second lens assembly 202 may horizontally rotate around the axis of the vertical portion. In this way, it is ensured that the horizontal rotation of the first lens assembly 201 and the second lens assembly 202 do not affect each other, so as to achieve a horizontal 360° full coverage. In some embodiments, the first lens assembly 201 is located at a lateral end of the main control board, the second lens assembly 202 is located at other lateral end of the main control board, and the first lens assembly 201 and the second lens assembly 202 are respectively electrically connected to the main control board 102. The first lens assembly 201 and the second lens assembly 202 share one main control board 102. The main control board 102 may independently control the horizontal motor 104 in one of the lens assemblies 200 (the first lens assembly 201 or the second lens assembly 202) to rotate, so as to implement the horizontal rotation of any one of the lens assemblies 200. Alternatively, the main control board 102 may simultaneously control horizontal motors 104 in the plurality of lens assemblies 200 (such as the first lens assembly 201 and the second lens assembly 202) to rotate, so as to implement the horizontal rotation of each lens assembly 200. In this way, it is beneficial to reduce the number of main control boards 102, make the number of parts smaller, facilitate replacement or maintenance, reduce the volume of the camera body 100, and thereby the volume of the entire camera 10.

As shown in FIG. 8 to FIG. 29, the lens assemblies each 200 include a lens housing 203 and an electrical control assembly disposed in the lens housing 203. The electrical control assembly includes a lens 204 and a vertical motor 205, and is electrically connected to the main control board 102. The main control board 102 is configured to control the vertical motor 205 to rotate in a vertical direction. In some embodiments, the first lens assembly 201 includes a first lens housing. A first lens and a first vertical transmission assembly are provided in a cavity-sharing manner in the first lens housing), and the first vertical transmission assembly may drive the first lens to make pitch movement relative to the first lens housing. Under a vertical transmission force generated by the first vertical transmission assembly, the first lens may pitch relative to the first lens housing and the T-shaped camera body 100. In some embodiments, the second lens assembly 202 includes a second lens housing. A second lens and a second vertical transmission assembly are provided in a cavity-sharing manner in the second lens housing, and under a vertical transmission force generated by the second vertical transmission assembly, the second lens may pitch relative to the second lens housing and the T-shaped camera body 100. In this way, the horizontal rotation and the vertical rotation of the first lens assembly 201 and the second lens assembly 202 respectively do not affect each other. It should be noted that the first lens assembly 201 and the second lens assembly 202 may be the above lens assemblies, which will not be repeated herein. In some embodiments, the first lens assembly 201 and the second lens assembly 202 share one main control board 102. The main control board 102 may independently control the vertical motor 205 in one of the lens assemblies 200 (the first lens assembly 201 or the second lens assembly 202) to rotate, so as to implement the vertical rotation of the lens 204 in any one of the lens assemblies 200. Alternatively, the main control board 102 may simultaneously control vertical motors 205 in the plurality of lens assemblies 200 (the first lens assembly 201 and the second lens assembly 202) to rotate, so as to implement the vertical rotation of the lens 204 in each lens assembly 200. In this way, it is beneficial to reduce the number of main control boards 102, make the number of parts smaller, facilitate replacement or maintenance, reduce the volume of the camera body 100, and thereby the volume of the entire camera 10.

As shown in FIG. 8 to FIG. 28, a center of the main control board 102 is coaxial with a center of the vertical portion. In some embodiments, the main control board 102 is assembled to a bottom wall of the housing body 106, and there is a heat dissipation space between the main control board 102 and the bottom wall of the housing body 106. The provision of the heat dissipation space is out of consideration of a safe distance for devices on the main control board 102. Moreover, a bottom of the housing body 106 is provided with a heat conducting pad, which is mainly configured to dissipate heat for the main control board 102. The heat conducting pad transfers heat to the housing body 106, and then the heat is dissipated from an outer wall of the housing body 106 to the environment. The provision of the heat dissipation space is also out of consideration for a thickness of the heat conducting pad. For example, the greater the thickness of the heat conducting pad is, the higher the cost is, and the lower the heat transfer efficiency is. On the other hand, it is beneficial to dissipate heat for the main control board 102. The provision of suitable heat dissipation space, on a basis of ensuring that there is a space for devices on the main control board 102, can reduce the cost, and improve the heat dissipation efficiency. In some embodiments, in the cavity (the first receiving cavity 108) the main control board 102 is disposed to have an air gap between the main control board and a bottom surface of the horizontal portion. The air gap may be the heat dissipation space.

In some embodiments, the bottom wall of the housing body 106 is recessed downwards to form an expansion groove 111. The expansion groove 111 is located below the main control board 102, and is in communication with the heat dissipation space. By providing the expansion groove 111, for example, when a device can no longer be accommodated on the main control board 102, the device can be accommodated in the expansion groove 111 for expansion. In addition, a high device on the main control board 102 may be accommodated in the expansion groove, so that a height of the entire housing body 106 can be reduced. Moreover, the expansion groove 111 can enlarge the heat dissipation space, which is beneficial to heat dissipation for the main control board 102. In this way, a thickness of the housing body 106 can be appropriately reduced, and thereby the volume of the camera body 100 can be reduced. In some embodiments, the expansion groove 111 is located in a transverse middle of the housing body 106, and the first lens assembly 201 and the second lens assembly 202 are respectively located on two lateral opposite sides of the expansion groove 111 and the assembly housing 107. Since one or more main control devices are disposed in a middle region of the main control board 102, the one or more main control devices have a relatively large volume, and a certain safe distance needs to be left. Therefore, the expansion groove 111 is provided in the middle portion of the housing body 106, which not only provides a receiving space and a safe distance for the main control devices, but also provides a placement space for a heat dissipation pad of the main control devices, so that a heat dissipation space is indirectly provided for the main control device. On a basis of safety, it is beneficial to dissipate heat, and reduce the volume of the housing body 106. Meanwhile, a space between the first lens assembly 201 and the second lens assembly 202 in a transverse direction can be effectively utilized.

In some embodiments, a bottom wall of the housing 101 is provided with mounting convex rings 112 protruding upwards. In some embodiments, the bottom wall of the housing body 106 is provided with mounting convex rings 112 protruding upwards. The mounting convex rings 112 are disposed to extend from the bottom wall of the housing body 106 upwards. In some embodiments, a top end of the lens housing 203 is provided with a rotating shaft portion 212 protruding upwards, and the rotating shaft portion 212 extends into the mounting convex ring 112 from bottom to top. In this way, the lens assembly 200, when being assembled to the camera body 100, goes into the housing body 106 from bottom to top, and may rotate relative to the assembly housing 107, so that the lens assembly 200 is quickly mounted. Both the assembling structure and the assembling manner are simple. In addition, a portion of the lens assembly 200 extends into the camera body 100, which can reduce the volume of the entire camera 10. In some embodiments, the camera 10 further includes a bearing assembly 113 and a sealing assembly 114, and the bearing assembly 113 and the sealing assembly 114 are assembled between the rotating shaft portion 212 and the mounting convex ring 112. The transmission gear 105 is sleeved on an upper end of the rotating shaft portion 212, and is located above the bearing assembly 113. The horizontal motor 104 drives the transmission gear 105 to rotate, so as to drive the rotating shaft portion 212 to rotate, and thus the entire lens assembly 200 to horizontally rotate relative to the assembly housing 107. The rotating shaft portion 212 is assembled with the transmission gear 105 through the sealing assembly 114 and the bearing assembly 113, and when the first lens assembly 201 horizontally rotates, an inner ring of the bearing assembly 113 rotates together with the tightening fixation of the rotating shaft portion 212 and the transmission gear 105, and an outer ring of the bearing assembly 113 and the camera body 100 do not rotate. In some embodiments, the sealing assembly 114 may include an oil seal 115 and an oil seal pressing plate 116. The bearing assembly 113 includes a bearing 117 and a bearing pressing plate 118. An inner wall of the mounting convex ring 112 is provided with a stepped surface for the sealing assembly 114 and a bearing mounting groove for mounting the bearing assembly 113. The oil seal 115 and the oil seal pressing plate 116 are sequentially assembled to the stepped surface. The bearing 117 and the bearing pressing plate 118 are sequentially assembled to the bearing mounting groove. When assembling the lens assembly 200 to the camera body 100, the oil seal 115 and the oil seal pressing plate 116 are first mounted and fixed on a lower side of the camera body. That is, the oil seal 115 is pressed into a circumference of the camera body 100 by using a tooling, and is fixed through the oil seal pressing plate 116. The bearing 117 is pressed into the camera body 100 by using a tooling, and is fixed to the outer ring through the bearing pressing plate 118. Then the rotating shaft portion 212 is inserted into the camera body 100 from below the camera body 100, and is in interference fit with the sealing assembly 114 to ensure the sealing here. The rotating shaft portion 212 is connected to the transmission gear 105, and is fixed to the inner ring of the bearing 117. The horizontal motor 104 is fixedly mounted to a main body of the housing 101, and may drive the transmission gear 105 and thus the lens assembly 200 together with the inner ring of the bearing 117 to horizontally rotate. In this way, on a basis of ensuring sealing performance, stable horizontal rotation is ensured, which is stable and reliable. In some embodiments, a seal mounting step is provided on a circumference of the rotating shaft portion 212, and the sealing assembly 114 is limiting assembled with the seal mounting step. The housing body 106 is provided with a communication hole 119. An inner wall of the communication hole 119 is provided with a bearing mounting step, and the bearing assembly 113 is assembled above the sealing assembly 114, and is in limit fit with the bearing mounting step. In the embodiments, the bearing 117 may be a rolling bearing. An outer ring of the bearing 117 is in fit with the inner wall of the mounting convex ring 112, and the inner ring of the bearing 117 is in fit with a shaft journal of the transmission gear 105, so as to implement smooth cylindrical connection, which is stable and reliable. In the embodiments, the oil seal 115 may be a skeleton seal ring, which can implement rotary sealing. An outer ring of the oil seal 115 is tightly sealed with the inner wall of the mounting convex ring 112, an inner ring of the oil seal 115 is tightly squeezed by interference of the rotating shaft portion 212, and both sides of the oil seal 115 are isolated, so that better sealing performance is implemented. In some embodiments, the first lens assembly 201 is connected to the camera body 100 through the communication hole 119, and the first lens assembly 201 may horizontally rotate under the driving force of the first horizontal transmission assembly 109. The horizontal motor 104 is disposed near a housing wall of the camera body 100, and the horizontal rotating gear (the transmission gear 105) is coaxial with the communication hole 119.

In some embodiments, the bottom wall of the housing 101 is further provided with one or more limit grooves 120 (as shown in FIG. 15). In some embodiments, one or more arc-shaped limit grooves are further provided on the bottom wall of the housing 101. In some embodiments, one or more arc-shaped limit grooves are further provided on the bottom wall of the housing body 106. The arc-shaped limit grooves extend around the mounting convex rings 112 respectively. A surface of the lens housing 203 is provided with a limit rib 213 protruding upwards and extending into the limit groove 120 (as shown in FIG. 26). When the lens assembly 200 horizontally rotates relative to the camera body 100, the limit rib 213 slides in the limit groove 120, so that the lens assembly 200 rotates within a range of 0-180°horizontally to flexibly adapt to scenes such as various channel-type road sections or complex intersections. In some embodiments, the one or more limit grooves 120 include a first limit groove 121 and a second limit groove 122. In some embodiments, the communication hole 119 includes a first communication hole 123 and a second communication hole 124. In some embodiments, the limit rib 213 includes a first limit rib and a second limit rib. In some embodiments, the first limit rib and the second limit rib are respectively a first protrusion portion facing toward the first limit groove 121 and a second protrusion portion facing toward the second limit groove 122. In some embodiments, a surface of the horizontal portion contacting the first lens assembly 201 and the second lens assembly 202 is provided with the first limit groove 121 surrounding the first communication hole 123 and the second limit groove 122 surrounding the second communication hole 124. The first lens housing is provided with the first limit rib, and the second lens housing is provided with the second limit rib. The first limit groove 121 receives the first limit rib, and the second limit groove 122 receives the second limit rib. When the first lens assembly 201 moves horizontally, the first limit rib slides in the first limit groove 121, and when the second lens assembly 202 moves horizontally, the second limit rib slides in the second limit groove 122. Radians of the first limit groove 121 and the second limit groove 122 respectively constrain horizontal rotation angles of the first lens assembly 201 and the second lens assembly 202. In this way, the lens assembly 200 rotates within a range of 0-180° horizontally, so as to flexibly adapt to scenes such as various channel-type road sections, complex intersections or the like. It should be noted that, since the lens housing of the second lens assembly 202 is not shown, the second limit rib is not shown. A structure of the second limit rib is similar to that of the first limit rib, and their connection relationship and working principle are same, and will not be repeated.

In some embodiments, a side wall of the expansion groove 111 is provided with an airtight test hole 125, and the expansion groove 111 is in communication with the outside through the airtight test hole 125. The airtight test hole 125 is disposed on a side of the expansion groove 111, which is beneficial to place an airtight detection tooling for detecting air tightness in the first receiving cavity. In some embodiments, the assembly housing 107 is connected below the expansion groove 111. In this way, a space below the expansion groove 111 is effectively utilized, so that a structure of the entire camera 10 is more compact. In some embodiments, the camera body 100 further includes a loudspeaker assembly 126 assembled in the assembly housing 107 and a loudspeaker cable connected to the loudspeaker assembly 126. A bottom wall of the expansion groove 111 is provided with a loudspeaker cable passing hole 128 penetrating vertically. The loudspeaker cable passes through the loudspeaker cable passing hole 128, and extends into the expansion groove 111 to be electrically connected to the main control board 102. In some embodiments, the camera body 100 further includes a cable connected to the main control board 102, and the bottom wall of the expansion groove 111 is provided with a cable passing hole 129 penetrating vertically. The cable passes downward through the cable passing hole 129, extends into the assembly housing 107, and extends from inside the assembly housing 107 to outside the assembly housing 107. In this way, a space below the expansion groove 111 is effectively utilized, so that a layout of the entire camera 10 is more compact. In some embodiments, both sides of the main control board 102 are provided with a convex ring avoidance hole 130, and the mounting convex ring 112 is retained in the convex ring avoidance hole 130. The horizontal motor 104 is located on a side of the mounting convex ring 112 away from the convex ring avoidance hole 130. In this way, a space of the first receiving cavity 108 in the housing body 106 is effectively utilized. Moreover, the main control board 102 is retained between two mounting convex rings 112, so that the main control board 102 is better fixed, and both ends of the main control board 102 are closer to the lens assemblies 200. In some embodiments, an edge of the main control board 102 is provided with an avoidance notch 131, and an avoidance space is formed between the avoidance notch 131 and a side wall of the housing body 106. In some embodiments, an edge of the main control board 102 is provided with one or more terminals 132 for being electrically connected to the first lens assembly 201 and the second lens assembly 202. In some embodiments, the camera 10 includes a microphone electrically connected to the main control board 102, and the microphone is assembled in the avoidance space. By providing the avoidance notch 131, there is the avoidance space between the avoidance notch 131 and the side wall of the housing body 106, so that the avoidance space allows for the microphone to be accommodated, which makes a layout in the housing body 106 more compact and a volume thereof smaller. The edge of the main control board 102 is provided with one or more microphone connectors 133, and the microphone connectors 133 are electrically connected to the microphone. In some embodiments, the edge of the main control board 102 is provided with an external connector 134. The side wall of the housing body 106 is provided with a card cover mounting opening 135 for mounting a storage card cover, and the card cover mounting opening 135 and the external connector 134 are located on a same side of the main control board 102. The card cover mounting opening 135 and the avoidance notch 131 are located on opposite sides of the main control board 102. In this way, spaces on both sides of the main control board 102 is effectively utilized, so that the layout is more compact. In some embodiments, both ends of the main control board 102 near the first horizontal transmission assembly 109 and the second horizontal transmission assembly 110 have a notch formed by extending inward along a length direction of the main control board 102, so that outer walls of the first communication hole 123 and the second communication hole 124 adjoin the main control board 102. In some embodiments, the notches are arc-shaped. The notches may be convex ring avoidance holes 130. In some embodiments, the main control board 102 is provided with terminals in vicinity of the notches and for being electrically connected to the first lens assembly 201 and the second lens assembly 202. In this way, the terminals connected to the first lens assembly 201 and the second lens assembly 202 are closer to the convex ring avoidance holes 130, which reduces a length of cable and makes a layout of the entire main control board compact. In some embodiments, the main control board 102 is provided with a photoelectric switch 136 and a controller connected to the photoelectric switch. The transmission gear 105 is provided with a photoelectric blocking piece 137, and the photoelectric blocking piece 137 rotates relative to the photoelectric switch 136 with the rotation of the transmission gear 105, and switches between a state of blocking the photoelectric switch 136 and a state of not blocking the photoelectric switch 136 by rotation. The controller is configured to determine a rotation angle of the transmission gear 105 according to an electrical signal of the photoelectric switch 136. For example, the photoelectric blocking piece 137 rotates relative to the photoelectric switch 136 with the rotation of the transmission gear 105. The photoelectric switch outputs a low level when the photoelectric blocking piece 137 blocks the photoelectric switch 136, and outputs a high level when the photoelectric blocking piece 137 does not block the photoelectric switch 136. The controller determines the rotation angle of the transmission gear 105 according to the low level or the high level. In this way, a rotation angle of the horizontal motor 104 can be accurately controlled, and a function of presetting a rotation angle of the camera 10 is implemented.

As shown in FIG. 8 to FIG. 40, the lens housing 203 may horizontally rotate relative to the camera body 100. Its relative position to the camera body 100 in the vertical direction remains unchanged. In some embodiments, the lens assembly 200 further includes a lens holder 216 disposed in the lens housing 203. The lens holder 216 may be longitudinally vertically rotatably disposed in the lens housing 203, and the lens 204 is assembled in the lens holder 216. In some embodiments, the vertical transmission assembly includes a vertical motor. The vertical motor 205 is disposed in the lens housing 203, and is connected to the lens holder 216. The vertical motor 205 is further electrically connected to the main control board 102, and the main control board 102 is configured to control the vertical motor 205, so as to drive the lens holder 216 to rotate in a longitudinally vertical direction, and further drive the lens 204 to rotate relative to the lens housing 203 in the longitudinally vertical direction. In this way, the vertical rotation of the lens 204 in the lens housing 203 can be implemented, and the pitch rotation of the lens 204 can be implemented. For example, a horizontal position is indicated as 0°, a position above the horizontal position is negative, and a position below the horizontal position is positive. In addition, the top end of the lens housing 203 is located in the housing 101, and is connected to the horizontal motor 104. The main control board 102 is configured to control the horizontal motor 104, so as to drive the lens assembly 200 to rotate relative to the camera body 100 in a transversely horizontal direction. In this way, the rotation of the lens relative to the housing 101 in the horizontal direction can be implemented. Compared with the related art, the horizontal rotation and the vertical rotation of the lens 204 of the camera 10 in the present application are separate, and do not affect each other. The lens assembly 200 may horizontally rotate relative to the camera body 100, and the lens 204 may vertically rotate in the lens housing 203 of the lens assembly 200. The number of parts is small, the entire volume is small, and the assembly is simple. The lens 204 may vertically rotate in the lens housing 203 of the lens assembly 200, and is sealed in and may rotate in the entire lens housing 203, which can effectively avoid problems such as difficult structural assembly, many airtight leakage points, and large overall height. Moreover, the first lens assembly 201 and the second lens assembly 202 share one main control board 102. By using the same main control board 102, not only the horizontal rotation but also the vertical rotation of any one or more of the plurality of lens assemblies 200 can be implemented. The horizontal rotation and the vertical rotation do not affect each other, and their application scenes are flexible.

In some embodiments, the lens 204 includes a lens body 217, a fixing sheet metal part 218, and a lens circuit board 219. The lens circuit board 219 is fixed to a rear end of the lens body 217 through the fixing sheet metal part 218. The fixing sheet metal part 218 can not only fix the lens circuit board 219 and the lens body 217, but also dissipate heat for the lens circuit board 219 and the lens body 217. One plate serves dual purposes, which reduces the number of parts, and makes the structure compact. In some embodiments, the lens assembly 200 further includes a holder base 220 fixed to the lens housing 203, and the lens holder 216 is rotatably connected to the holder base 220. The lens holder 216 is rotatable relative to the holder base 220 in the longitudinally vertical direction. In some embodiments, the holder base 220 is fixedly connected to the lens housing 203, and the vertical motor 205 is connected to the holder base 220 to drive the lens holder 216 to rotate. In this way, the lens holder 216 is disposed to fix the lens 204, the holder base 220 is disposed to fix the lens holder 216, and the lens 204 and the lens holder 216 rotate together relative to the holder base 220, which is stable and reliable. In some embodiments, the holder base 220 includes a rotating cavity 221 with an opening facing downwards, and the lens holder 216 and the lens 204 are at least partially located in the rotating cavity 221. The lens 204 is assembled in the lens holder 216, and is snapped fit to the rotating cavity 221 from a bottom of the rotating cavity 221. In some embodiments, the vertical transmission assembly further includes transmission teeth. For example, holder transmission teeth 222 are provided on an outer side of the lens holder 216, and the vertical motor 205 is in transmission connection with the holder transmission teeth 222 to drive the lens holder 216, so as to bring the lens 204 to vertically rotate in the rotating cavity 221. In some embodiments, the lens holder 216 includes a rotation connecting shaft 223, and the rotation connecting shaft 223 is rotatably connected to the holder base 220. The rotation connecting shaft 223 is configured to movably connect the lens holder 216 to the holder base 220. The holder base 220 plays a role of fixing. The vertical motor 205 drives the holder transmission teeth 222 to drive the lens holder 216, so as to bring the lens 204 to vertically rotate in the rotating cavity 221. In some embodiments, the lens holder 216 includes holder front end 224 and holder rear end 225 that are opposite. The holder front end 224 is closer to a front end of the lens 204 than the holder rear end 225. The rotation connecting shaft 223 is provided on an outer side of the holder front end 224, and the holder transmission teeth 222 are provided on an outer side of the holder rear end 225. The vertical motor 205 drives the holder transmission gear 222 to drive the holder rear end 225, so as to bring a rear end of the lens 204 to rotate vertically, and further bring the front end of the lens 204 to rotate vertically in the rotating cavity 221. Further, the lens 204 is fixed to the holder base 220 through the lens holder 216. While the lens 204 vertically "nods", the lens 204 may horizontally move with the lens assembly 200, which is convenient for the lens to rapidly capture a target, and has a wider application range. In some embodiments, the holder transmission teeth 222 are located on a lateral side of the lens holder 216, and the vertical motor 205 is located on the side of the lens holder 216 where the holder transmission teeth 222 are disposed. Moreover, the holder transmission teeth 222 and the vertical motor 205 are assembled on a same lateral side of the lens holder 216, which facilitates the assembly of the vertical motor 205, and reduces assembly difficulty.

In some embodiments, the lens assembly includes one lens. In some embodiments, the lens assembly includes a plurality of lenses. Each lens is correspondingly provided with structures such as a lens holder and holder transmission teeth, and for their connection manner, reference may be made hereinbefore, which will not be repeated herein. In some embodiments, the plurality of lenses share a holder base. In some embodiments, each of the plurality of lenses is separately provided with a holder base.

In some embodiments, the lens housing 203 includes a lens housing body 226 and a housing upper cover 227 assembled to a top of the lens housing body 226. The lens housing body 226 includes a second receiving cavity 228 for receiving the lens. A cavity opening 229 is provided above the receiving cavity. The housing upper cover 227 is mounted to contact the camera body 100. The housing upper cover 227 includes a cover body 230 and the rotating shaft portion 212 extending upward from the cover body 230. The cover body 230 covers the cavity opening 229. The rotating shaft portion 212 is embedded into the camera body 100, and is rotatably connected to the camera body 100. The camera body 100 covers the cover body 230 from above the cover body 230. In some embodiments, the cover body 230 is embedded into the cavity opening 229, and an upper surface of the cover body 230 is lower than or flush with an upper edge of the cavity opening 229. In this way, a top portion of the lens housing 203 extends into the camera body 100, and the volume of the camera 10 is smaller. Moreover, the lens housing body 226 is disposed as a plastic part, the housing upper cover 227 is disposed as a metal part, and a top of the housing upper cover 227 may be completely blocked by the camera body 100, and after assembly, is not easy to see, so that surface processing is not needed, and a surface spraying process can be cancelled, which can save the spraying cost of the metal part. The lens housing body 226 is disposed as a plastic part, and is formed by a single injection molding process, reducing cost of the entire camera. In some embodiments, the first lens housing includes the housing upper cover 227 and the integrally injection molded lens housing body 226. The housing upper cover 227 includes a planar portion and a protrusion longitudinally extending. The protrusion is connected to the camera body 100 in a form of a rotating shaft. The planar portion may be a cover body 230. The protrusion may be a rotating shaft portion 212. In some embodiments, the protrusion extends into the mounting convex ring 112 from below the mounting convex ring. In some embodiments, a seal mounting step is provided in a circumference of the protrusion, and the sealing assembly 114 is limit assembled with the seal mounting step, and is located at the circumference of the protrusion. The inner wall of the mounting convex ring 112 is provided with a bearing mounting step, and the bearing assembly 113 is assembled to the bearing mounting step, and is located above the sealing assembly 114.

In some embodiments, the lens assembly 200 includes a cable 231 connecting the electrical control assembly and the main control board 102. The electrical control assembly includes the lens 204 and the vertical motor 205. The cable 231 may be a cable connected to the lens 204 and the vertical motor 205, and be one or more cables. The cable further includes a lamp panel cable and a heating glass cable described below. In some embodiments, a communication hole 119 is provided above the lens housing 203, and the communication hole 119 is in communication with the first receiving cavity 108 and the second receiving cavity 228. The first receiving cavity 108 and the second receiving cavity 228 are sealed together, which can solve waterproof and airtight problems, avoid multiple sealing and a large number of parts, reduce the cost of parts and assembly of the entire camera, and improve the reliability of air tightness of the entire camera. Moreover, the cable 231 extends upward from the second receiving cavity 228, passes through the communication hole 119, extends into the first receiving cavity 108, and is electrically connected to the main control board 102. In this way, the cable 231 of the camera 10 extends into the first receiving cavity 108 only from the second receiving cavity 228, and is connected to the main control board 102. Thus, the cable 231 connected to the lens assembly 200 passes through fewer cavities, the circuit wiring is compact, and the mounting operation is simplified. Compared with the related art, the product structure is simplified, the wiring path is shortened, and the cable reliability is improved. In some embodiments, the horizontal portion is provided with a first communication hole 123 and a second communication hole 124 for passing through cables of the main control board 102, and the first communication hole 123 and the second communication hole 124 are provided near edges of the horizontal portion. In some embodiments, a cable connected to the first lens assembly 201 sequentially passes through the first lens housing, and the first communication hole 123 in the horizontal portion that is in communication with the first lens housing and is electrically connected to the main control board 102. In addition, a cable connected to the second lens assembly 202 sequentially passes through the second lens housing, and the second communication hole 124 in the horizontal portion that is in communication with the second lens housing and is electrically connected to the main control board 102. In this way, the cables 231 connected to the first lens assembly 201 and the second lens assembly 202 pass through fewer cavities, and the circuit connection is compact. In addition, it is ensured that the cables 231 are not twisted or pulled during movement.

In some embodiments, the holder base 220 includes a holder body 232 and a wire harness clip retainer 233 disposed to the holder body 232. The wire harness clip retainer 233 is disposed on the holder body 232. The cable 231 includes a lens cable connecting the lens 204 and the main control board 102, and the lens cable is constrained in the wire harness clip retainer 233. In this way, the lens cable is retained, which ensures that the lens cable is not twisted or pulled during movement. When the lens assembly 200 vertically rotates, the lens cable is not affected. Besides, the cable includes a motor cable connecting the vertical motor 205 and the main control board 102, and the motor cable is constrained in the wire harness clip retainer 233. In this way, the motor cable is retained, which ensures that the motor cable is not twisted or pulled during movement. When the lens assembly 200 horizontally rotates, the motor cable is not affected. Moreover, the lens cable and the motor cable are restrained through the wire harness clip retainer 233, so that a plurality of cables 231 are retained neatly, and the structure is more compact. Moreover, cables in the lens housing 203 are effectively isolated from cables in the camera body 100, and the vertical movement and the horizontal movement of the lens 204 do not affect each other. In some embodiments, the lens circuit board 219 includes a lens board and a lens interface board. The lens board and the lens interface board are mounted on the lens body 217 through the fixing sheet metal part 218, and meanwhile, the lens board and the lens interface board have FPC (Flexible Printed Circuit) wires routed out. The vertical motor 205 is fixed to the holder base 220 through screws, then the lens 204 and the lens holder 216 are jointly mounted to the holder base 220. One or more cables are provided in a tail portion of the vertical motor 205 to lead out the motor cable. Then the cables extend into the wire harness clip retainer 233 for constraint. In some embodiments, the first lens assembly 201 further includes a first holder base, and the first holder base is provided with a wire harness structure. The wire harness structure may be a wire harness clip retainer 233. The wire harness structure includes a wire harness hole penetrating vertically. The cable goes through the wire harness hole from bottom to top to extend into the communication hole 119. In some embodiments, a hole center of the wire harness hole is coaxial with a hole center of the communication hole 119. In this way, it is ensured that the cables can vertically extend upward into the communication hole 119, which makes the structure more compact.

In some embodiments, the lens assembly 200 further includes a front cover assembly 234 disposed on a front side of the lens housing 203, and the front cover assembly 234 is assembled to the lens housing 203. The front cover assembly 234 is assembled to the lens housing body 226. In some embodiments, the front cover assembly 234 includes a front cover housing 235, a lamp panel 236, and window cover glass 237, and the window cover glass 237 corresponds to the lens 204. The lamp panel 236 and the window cover glass 237 are transversely distributed in the front cover housing 235. The front cover housing 235 is assembled to the lens housing 203, and is located in front of the lens 204. In some embodiments, the front cover housing 235 is a metal part. Heat of the lamp panel 236 and the window cover glass 237 is conducted through an inner wall and side walls of the front cover housing 235. In this way, the front cover housing 235 may serve as a fixing member and a heat dissipation member, and one part serves a plurality of functions, which reduces the number of parts and the volume of the lens assembly 200. The window cover glass is heating glass (anti-fog glass), and is fixed to the front cover housing 235 with adhesive. Meanwhile, a layer screen printed at an edge of the glass is provided with a twisted pair lead-out plate. The lamp panel 236 is fixed to the front cover housing 235 through screws, and a plurality of LED lamps are disposed on the lamp panel 236. The front cover assembly 234 further includes lamp cups 253 and light cover glass 254. The lamp cups 253 are mounted below the lamp panel 236. The lamp cups 253 are configured to refract light emitted from the lamp panel 236, and plays a role of supplementing light for the camera 10. During illumination, light will be emitted through the lamp cups 253 and the light cover glass 254, thereby supplementing light for the camera 10. At the same time, an interface on the lamp panel 236 needs to be connected with a cable of 6PIN, which is led out to the main control board 102. The light cover glass 254 covers the lamp panel 236. The light cover glass 254 and the window cover glass 237 being assembled in the front cover housing 235 may be used for sealing and waterproofing of the front cover housing 235, and transmit light. The lamp panel 236 is fixed on the front cover housing 235. The lamp panel 236 is an aluminum substrate, on which 4 LED lamps are arranged. The front cover housing 235 is a metal part, and may be used to solve a heat dissipation problem caused by light emission of the lamp panel 236. Heat is conducted into the air through the inner wall and peripheral side walls of the front cover housing 235, and parting of the front cover housing 235 is defined according to a heat dissipation area of the lamp panel, which not only meets heat dissipation requirements, but also considers the overall quality of the front cover housing 235. The front cover housing 235 can meet the heat dissipation requirements, and the camera body mating with the front cover housing 235 may be made of a plastic material, which saves the material cost. The electrical control assembly includes the lamp panel 236 located in the front cover housing 235 and the window cover glass 237 disposed in the front cover housing 235. The cable 231 includes a lamp panel cable connecting the lamp panel 236 and the main control board 102 and a heating glass cable connecting the window cover glass 237 and the main control board 102, and the lamp panel cable and the heating glass cable are constrained in the wire harness clip retainer 233. In this way, by disposing the wire harness clip retainer 233, a plurality of cables of the lens assembly 200 are constrained, so that a plurality of lamp panel cables and heating glass cables are received neatly, and the structure is more compact. In addition, it is ensured that the lamp panel cable and the heating glass cable are not twisted or pulled during movement to avoid being affected. In some embodiments, the lens assembly 200 includes a first seal ring 238 and a second seal ring 239. The first seal ring 238 is disposed between the housing upper cover 227 and the lens housing body 226, and is configured to seal the housing upper cover 227 and the lens housing body 226. The second seal ring 239 is disposed between the front cover housing 235 and the lens housing body 226, and is configured to seal the front cover housing 235 and the lens housing body 226. In this way, it is ensured that the sealing performance of the second receiving cavity 228 in the lens housing body 226 is better, so that the entire lens assembly 200 is waterproof. In some embodiments, the wire harness clip retainer 233 is located below the communication hole 119. In some embodiments, the wire harness clip retainer 233 extends into the communication hole 119. In this way, it is ensured that the wire harness clip retainer 233 can vertically extend into the communication hole 119. In some embodiments, the wire harness clip retainer 233 includes a first clip ring 2331 and a second clip ring 2332 disposed to protrude from a top portion of the first clip ring 2331. The first clip ring 2331 and the second clip ring 2332 are vertically connected, and the cable 231 sequentially passes through the first clip ring 2331 and the second clip ring 2332 from bottom to top, and extends into the communication hole 119. The first clip ring 2331 ensures a bending degree of the cable, and avoids the bending degree of the cable from being larger. The second clip ring 2332 ensures that a plurality of cables vertically extend upwards. In some embodiments, a height of the second clip ring 2332 is larger than a height of the first clip ring 2331. In this way, it is ensured that a plurality of cables vertically extend upwards. In some embodiments, an inner diameter of the first clip ring 2331 is greater than an inner diameter of the second clip ring 2332. In this way, it is ensured that the cable can smoothly extend into the second clip ring 2332 from the first clip ring 2331, which avoids a bending degree of the cable from being larger.

As shown in FIG. 21 to FIG. 25, the camera body 100 further includes a baffle assembly 138. The baffle assembly 138 is disposed in the housing 101, and the baffle assembly 138 is provided with a threading hole 139 that is in communication with the communication hole 119 and penetrates vertically. The cable sequentially passes through the communication hole 119 and the threading hole 139, extends toward the main control board 102 above the baffle assembly 138, and is connected to the main control board 102. By disposing the baffle assembly 138, a plurality of cables of the lens assembly 200 are constrained, so that the plurality of cables connected to the main control board 102 are arranged neatly, and cables in the first receiving cavity 108 and the second receiving cavity 228 are compact. In addition, through the cooperative use of the wire harness clip retainer 233 and the baffle assembly 138, the cables may be set to have sufficient telescopic allowance, which ensures that the cables are not too long or too short, so that the cables are not easily twisted or pulled during the horizontal rotation or the vertical rotation of the lens assembly 200. In some embodiments, the baffle assembly 138 includes an arc-shaped side wall 140, and the arc-shaped side wall 140 is disposed to cover the horizontal rotating gear (transmission gear 105) and avoid the horizontal motor 104. An end of the main control board 102 near the baffle assembly 138 is provided with a notch recessed inward along the length direction of the main control board 102. The notch may be a convex ring avoidance hole 130. A cable electrically connected to the first lens assembly 201, after passing through the communication hole 119, the transmission gear 105, and the baffle assembly 138, may be electrically connected to the main control board 102. In some embodiments, in the horizontal direction, a side of the baffle assembly 138 relatively close to the horizontal motor 104 is a fractured surface, and a side of the baffle assembly 138 relatively away from the horizontal motor 104 is an arc surface. The fractured surface is provided in order to leave enough space to receive part of rotating shaft of the horizontal motor 104. In some embodiments, a side wall of the communication hole 119 extends downward from a top wall of the baffle assembly 138, and the transmission gear 105 is located outside the side wall of the communication hole 119. In this way, the baffle assembly 138 separates the cable from the transmission gear 105 to prevent the cable from contacting the transmission gear 105, and the structure is simple and effective. In some embodiments, a side wall of the threading hole 139 extends downward from the top wall of the baffle assembly 138, and is aligned with the communication hole 119. The transmission gear 105 is located outside the side wall of the threading hole 139. The side wall of the threading hole 139 may be an arc-shaped side wall 140 mentioned above, and is configured to isolate the transmission gear 105 from the cable. In some embodiments, a top surface of the baffle assembly 138 is provided with a plurality of limit clips 141. The lens assembly 200 includes a plurality of cables, and the plurality of cables are clipped to the plurality of limit clips 141. The limit clips 141 are used as limit identifiers, and the limit clips 141 are conveniently mounted, and can effectively control a wire length of the cables, ensuring that each cable has enough rotation allowance, avoiding a problem that the adjustment to the lens assembly 200 in the horizontal direction or in the vertical direction causes the cable to be twisted and pulled, and thereby ensuring that each cable should not be too long or too short. In some embodiments, at least two of the plurality of limit clips 141 are distributed at intervals at a circumference of the threading hole 139, and at least two of the plurality of cables are dispersed at the circumference of the threading hole 139, and are clipped to different limit clips 141. In this way, the plurality of cables are neatly arranged, and two adjacent cables are avoided from affecting each other, so as to ensure that each cable has enough wire length allowance, and avoid a problem that the cables are pulled, twisted, or the like during the horizontal rotation or the vertical rotation. Each cable is led out to the wire harness clip retainer 233 of the lens holder 216, and the cables are bound to the wire harness clip retainer 233 by a wire, then extend into the camera body 100 through a center hole of the baffle assembly 138. The limit clips 141 on the baffle assembly 138 can fix the cable, so that both ends of the cable are fixed, and only a small section of cables near the rotating structure is in a free state. This fixing scheme can effectively solve the problem that internal wires are twisted, pulled, etc. when the lens assembly 200 horizontally or vertically rotates, and improve the reliability of the cables. In some embodiments, the baffle assembly 138 is located at a transverse end of the main control board 102. The baffle assembly 138 is located above the main control board 102, and the baffle assembly 138 is located above the transmission gear 105 and covers at least a portion of the transmission gear 105. In this way, the baffle assembly 138 can not only constrain the cable, but also fix the main control board 102 and the transmission gear 105. One part serves multiple functions, which reduces the number of parts, and makes the entire structure compact. In some embodiments, the baffle assembly 138 is provided with a plurality of limit parts 142 disposed to protrude and extend downwards. The main control board 102 is provided with a plurality of limit grooves 143 corresponding to positions of the limit parts 142. The baffle assembly 138 is fixed on the main control board 102 through limit engagement of the plurality of limit parts 142 and the plurality of limit grooves 143. In this way, the limit engagement facilitates the assembly of the baffle assembly 138, and reduces other fixing components, which reduces the number of parts and simplifies the structure. The lens housing 203 is fixed together with the transmission gear 105 through the sealing assembly 114 and the bearing assembly 113, and horizontal rotation in a circumferential direction is unconstrained. The horizontal motor 104 is fixed on the camera body 100. When the horizontal motor 104 drives the transmission gear 105 to rotate, the lens housing 203 is driven by the transmission gear 105 to horizontally rotate. In this process, the lens cable and the motor cable are led out from the second receiving cavity 228, and extend into the first receiving cavity 108 through the threading hole 139 in the middle of the baffle assembly 138. The lens cable and the motor cable, when coming out of the threading hole 139, have an end fixed on a limit clip 141 of the baffle assembly 138 to ensure that the lens cable and the motor cable are not twisted and pulled during movement, so as to ensure the stability of the cables. Finally, the lens cable and the motor cable are connected to corresponding connection terminals of the main control board 102. The baffle assembly 138 may be used for threading wires and fixing cables, and at the same time can block the transmission gear 105 to prevent the cables from contacting the transmission gear 105 and protect the cables. The bearing assembly 113 plays a role of supporting and rotating the lens housing 203, and the sealing assembly 114 plays a role of dynamic sealing, so that the lens assembly 200 is in communication together with the camera body 100 to isolate outside air.

As shown in FIG. 33 to FIG. 40, the housing upper cover 227 is snap-fit to the top portion of the lens housing body 226. The top portion of the lens housing body 226 is provided with a step 240 going upwards and a body flange 241 protruding upward from the periphery of the step 240, and the step 240 and the body flange 241 surround the cavity opening 229. An edge of the cover body 230 extends downwards, with a cover body flange 242 provided. The cover body flange 242 is located to an inner side of the body flange 241, and is in limit fit with the body flange 241 on the circumference of the cavity opening 229. The cover body flange 242 is pressed downward against the step 240. In some embodiments, an edge of the lens housing body 226 extends upwards, with a body flange 241 provided. An edge of a planar portion of the cover body 230 extends downwards, with a cover body flange 242 provided. The cover body flange 242 is located on an inner side of the body flange 241, and the cover body flange 242 is limited and mated to the body flange 241 on a circumference of the lens housing body 226. In this way, it is ensured that the cover body 230 is sealedly connected to the lens housing body 226, so that the sealing performance of the second receiving cavity 228 in the lens housing body 226 is better. In some embodiments, the top portion of the lens housing body 226 is provided with a seal groove 243 opened upwards, and the seal groove 243 is disposed on the inner side of the body flange 241. The camera 10 further includes a seal member 244, and the seal member 244 seals between the cover body flange 242 and the seal groove 243. In some embodiments, the seal member 244 includes a horizontal portion 245 and a vertical portion 246 connected to the horizontal portion 245. The horizontal portion 245 is sandwiched between the cover body flange 242 and a top portion of the seal groove 243, and abuts against the body flange 241 on the circumference thereof to cover an opening of the seal groove 243. The vertical portion 246 is located on a side wall of the seal groove 243, and abuts against the side wall of the seal groove 243 on the circumference thereof. In some embodiments, the seal member 244 is located and seals between the cover body flange 242 and the step 240, and is configured to seal the cover body flange 242 and the step 240. The seal groove 243 is recessed downwards, and is disposed in the step 240. The seal member 244 includes a clamping portion sandwiched between the cover body flange 242 and the step 240. The clamping portion may be the horizontal portion mentioned above, and the clamping portion covers above the seal groove 243. In this way, external water vapor can be blocked from entering the second receiving cavity 228, which avoids affecting the electrical control assemblies. In some embodiments, the body flange 241 is provided with a drain hole 247 in communication with the seal groove 243. The drain hole 247 is lower than the clamping portion. The drain hole 247 is lower than the horizontal portion 245. In this way, the drain hole 247 is disposed to drain accumulated water in the seal groove 243, so that the accumulated water is discharged out of the lens assembly 200, which protects the use performance of internal devices. The lower drain hole 247, the better. In some embodiments, a first fixing post 248 fixedly connected to the cover body 230 is disposed to protrude upwards in the seal groove 243. The first fixing post 248 is located between the seal member 244 and the body flange 241. The cover body 230 is fixed to the top portion of the lens housing body 226 through the first fixing post 248, so that the structure of the lens housing body 226 can be effectively utilized. A plurality of first fixing posts 248 are provided, and the plurality of first fixing posts 248 are disposed at intervals in the top portion of the lens housing body 226. In some embodiments, a drain space 249 is provided between the first fixing post 248 and the body flange 241. The drain hole 247 is disposed corresponding to the drain space 249. In this way, it is beneficial for external water vapor or rainwater to flow into the drain space 249, and discharge through the drain hole 247. The mating that the housing upper cover 227 is snap fit to the lens housing body 226 needs waterproof sealing, which may be implemented by adding the seal member1 244. When the seal groove 243 is exposed to rain, water accumulation will occur, and the drain hole 247 and the drain space 249 are disposed at the seal groove 243, which is beneficial to discharge accumulated water. In some embodiments, an outer side of the lens housing body 226 is recessed inwards, with an artistic groove 250 provided, and the drain hole 247 is located in the artistic groove 250. The drain hole 247 is provided in the artistic groove 250 for concealing the drain hole 247, so that the drain hole is less obvious and abrupt, and the exterior of the entire lens assembly 200 is aesthetic. The drain hole 247 is embedded in the artistic groove 250, which is practical and aesthetic. At the same time, the artistic groove 250 further weakens a problem of stress marks caused by different wall thicknesses of the camera body 100, and avoids defects related to part mold shaping. In some embodiments, a plurality of second fixing posts 251 are provided in the lens housing body 226. The plurality of second fixing posts 251 are disposed in the second receiving cavity 228, and the lens holder 216 is assembled with the lens housing body 226 through the plurality of second fixing posts 251. In this way, a space in the second receiving cavity 228 can be effectively utilized, so that the layout is more compact. A plurality of second fixing posts 251 are provided, and the plurality of second fixing posts 251 are disposed at intervals in the lens housing body 226. In some embodiments, a plurality of third fixing holes 252 is provided on a front side of the lens housing body 226, and the front cover assembly 234 is assembled with the lens housing body 226 through the plurality of third fixing holes 252. In this way, the structure of the lens housing body 226 can be effectively utilized. The plurality of first fixing posts 248, the plurality of second fixing posts 251, and the plurality of third fixing holes 252 are integrated into the lens housing body 226, and their integration level is high, which can reduce other fixing members, so that the number of parts is small, and the structure is simplified.

As shown in FIG. 41, the camera 10 further includes an expansion/extension component 300 transversely extending and disposed above the camera body 100 and/or below the lens assembly 200. In some embodiments, the expansion component 300 is disposed on the top of the camera body 100. In some other embodiments, the expansion component 300 is disposed at the bottom of the lens assembly 200. In some other embodiments, the expansion component 300 is disposed on the top of the camera body 100 and at the bottom of the lens assembly 200. In some embodiments, the expansion component 300 includes at least one of a radio frequency communication assembly, a imaging assembly, or a radar assembly. For example, radio frequency communication assemblies such as 4G, 5G and WiFi may be added, and camera assemblies may be further added. In some embodiments, the expansion component 300 further includes a first expansion circuit board 301 and a second expansion circuit board 302. In some embodiments, the camera body 100 further includes a first expansion circuit board 301, and the first expansion circuit board 301 is assembled in the expansion groove 111. In some embodiments, the camera body 100 further includes a second expansion circuit board 302, and the second expansion circuit board 302 is located above and/or below the main control board 102. The first expansion circuit board 301 and the second expansion circuit board 302 may be power boards or control boards, which is not limited in the present application. In this way, an application range of the camera 10 can be extended, providing good potential for future expansion.

As shown in FIG. 42 to FIG. 48, the camera 10 is fixedly mounted through a base assembly 400. The base assembly 400 supports the vertical portion, so that the camera 10 can be horizontally mounted in a monitoring region. The first lens assembly 201 and the second lens assembly 202 are symmetrically distributed on both sides of the base assembly 400. In some embodiments, the base assembly 400 includes a mounting base 401 and a mounting bracket 402. The camera 10 is assembled to the mounting base 401. The mounting base 401 plays a role of fixing the camera 10. The mounting base 401 is assembled to the mounting bracket 402, and can be adjusted in a vertical plane relative to the mounting bracket 402. The mounting bracket 402 is fixedly connected to the mounting base 401 in a longitudinal direction. When adjusting the camera 10 to be in a horizontal state, a levelness of the camera 10 is adjusted by adjusting a levelness of the mounting base 401. Compared with the related art, the camera 10 does not need to be powered on to repeatedly adjust the camera 10, so as to improve the mounting efficiency and reduce labor cost. In some embodiments, the base assembly 400 further includes a level 403, and the level 403 is disposed on the mounting base 401. The level 403 is configured to, when the mounting base 401 is adjusted relative to the mounting bracket 402 in the vertical plane, detect whether the mounting base 401 is horizontal. When the level 403 is horizontal, the mounting base 401 is fixed to the mounting bracket 402, so that the camera 10 is horizontal. In this way, the levelness of the mounting base 401 is detected through the level 403. When it is detected that the mounting base 401 is in the horizontal state, the camera 10 is assembled to the mounting base 401. Thus, it is ensured that the camera 10, when being assembled to the mounting base 401, is in the horizontal state, and thereby, it is implemented that, when the entire camera is mounted, the camera 10 is always in the horizontal state, which is beneficial for subsequent image forming. Moreover, the structure is simple, the mounting efficiency is high, and the cost is low. In some embodiments, the level 403 may be a bubble level, in which, a bubble is designed. The horizontal state of the mounting base 401 is determined by whether the bubble is in a middle position. The bubble level may be disposed in any region of the base, and is generally disposed in the middle thereof. In some embodiments, the mounting base 401 includes a base body 404 and a mounting portion 405 disposed at an end of the base body 404 and facing toward the camera 10. The mounting portion 405 protrudes from the base body 404, and is disposed to extend toward the camera 10. The base body 404 is snap-fit connected to a bottom wall of the camera 10 in the longitudinal direction, and the mounting portion 405 is fixedly connected to a side wall of the camera 10 in the horizontal direction. The base body 404 supports the camera 10 in the longitudinal direction. The mounting portion 405 abuts against the camera 10 in the horizontal direction. In this way, connection to the camera 10 in two different directions: longitudinal and horizontal directions, is ensured, and the fixing stability is better. In some embodiments, a snap 406 is disposed to protrude from the base body 404. A through hole fitting the snap 406 is provided in the bottom wall of the camera 10, and the snap 406 passes through the through hole from below the through hole, and is stuck with an upper wall of the through hole. The camera 10 is inserted into the base body 404 from top to bottom, and is pre-fixed through the snap 406. In this way, the camera 10 is pre-fixed to the base body 404 to ensure that the camera 10 is not easily separated from the base body 404 during subsequent fixing. In some embodiments, the side wall of the camera 10 is recessed inwards to form a cut 408, and the cut 408 is in limit fit with the mounting portion 405 in the horizontal direction. The camera 10 is provided with one or more base holes 409. The camera 10 further includes one or more fixing members 410, and the one or more fixing members 410 are disposed to penetrate the mounting portion 405 in the horizontal direction, and is fixed to the base holes 409. In some embodiments, the camera 10 includes the bottom wall of the camera 10 and the side wall of the camera 10. The bottom wall of the camera 10 abuts against and limits the base body 404 in the vertical direction, and the side wall of the camera 10 abuts against and limits a side wall of the mounting portion 405 in the horizontal direction. The camera 10, after being pre-fixed, is moved toward the mounting portion 405 in the horizontal direction so that a tail portion of the camera 10 fits the mounting portion 405, and finally the mounting is completed by using the fixing members 410. This assembling method is simple and rapid, and at the same time is stable and reliable.

In some embodiments, the camera 10 includes a sheet metal support 146 disposed in the housing 101, and the sheet metal support 146 is assembled with the camera body 100. The sheet metal support 146 is fixedly connected to the camera body 100. A first through hole 147 is provided in a bottom portion of the housing 101, and a second through hole 148 corresponding to a position of the first through hole 147 is provided in a bottom portion of the sheet metal support 146. The buckle 406 penetrates through the first through hole 147 and the second through hole 148 and is stuck to an inner bottom wall of the sheet metal support 146. In some embodiments, the sheet metal support 146 includes sheet metal sidewalls and a U-shaped portion, and the U-shaped portion is disposed in a space enclosed by the sheet metal sidewalls. The first through hole 147 is provided in the bottom portion of the housing 101, and the second through hole 148 corresponding to the position of the first through hole 147 is provided in a bottom portion of the U-shaped portion. The snap 406 passes through the first through hole 147 and the second through hole 148, and is stuck to an inner bottom wall of the U-shaped portion. The camera 10 is inserted into the base body 404 from top to bottom, so that the snap 406 passes through the first through hole 147 and the second through hole 148, and is stuck to the inner bottom wall of the sheet metal support 146 for pre-fixing. In this way, the camera 10 is pre-fixed to the base body 404 to ensure that the camera 10 is not easily separated from the base body 404 during subsequent fixing. The method in which the buckle 406 is stuck to the inner bottom wall of the sheet metal support 146 is simple and rapid, and makes the fixing stable. In some embodiments, the sheet metal support 146 includes a sheet metal bottom wall 149 and a sheet metal rear side wall 150 connected to the sheet metal bottom wall 149. In some embodiments, the side wall of the mounting portion 405 abuts against the back of the sheet metal rear side wall 150. The second through hole 148 is disposed in the sheet metal bottom wall 149, and the snap 406 includes a snap extension portion 411 extending upward from the base body 404 and a snap head portion 412 disposed on an upper end of the snap extension portion 411. The snap head portion 412 extends in a direction away from the sheet metal rear side wall 150 and is snapped 406 above the second through hole 148. When the camera 10 is assembled, the camera 10 is inserted into the base body 404 from top to bottom, and the snap extension portion 411 passes through the first through hole 147 and the second through hole 148, so that the snap head portion 412 abuts against the sheet metal bottom wall 149. Moreover, the snap head portion 412 extends in a direction away from the sheet metal rear side wall 150 to ensure that the camera 10 is not easily separated from the base body 404 in the horizontal direction, and the fixing stability is better. In some embodiments, the mounting portion 405 is provided with one or more first mounting holes 413. One or more second mounting holes corresponding to positions of the one or more first mounting holes 413 are provided in the sheet metal rear side wall 150. The second mounting holes may be the base holes 409. The camera 10 further includes one or more first fixing members (fixing members 410), and the first fixing members pass through the first mounting holes 413 and the second mounting holes (base holes 409) to fix the sheet metal rear side wall 150 and the mounting portion 405. In this way, the assembling method is simple and rapid, and also stable and reliable. In some embodiments, the base body 404 is recessed downwards, with a mounting groove 414 provided. The level 403 is disposed in the mounting groove 414, and the mounting groove 414 is located in a middle region of the base body 404. The level 403 is inserted into the mounting groove 414 from top to bottom. In this way, the mounting groove 414 is configured to receive the level 403. The assembling method is simple and rapid, and also stable and reliable. In some embodiments, the sheet metal bottom wall 149 covers the level 403. In this way, the level 403 is prevented from being separated from the mounting groove 414. In some embodiments, the base body 404 is provided with at least one drain hole 415 penetrating vertically. In this way, accumulated water in the base body 404 can be discharged, and corrosion hazard of water soaking the camera 10 can be reduced. In some embodiments, cables connected to the main control board 102 sequentially pass through the vertical portion and the base assembly 400 and then are connected to an external power supply. In some embodiments, the camera 10 further includes a safety rope and/or a cable 151. An avoidance hole 416 is provided on a side of the mounting portion 405 facing away from the base body 404. The safety rope and/or the cable 151 extends from the camera 10 through the avoidance hole 416. It is beneficial to receive the safety rope and/or the cable 151. A cable extending from the tail portion of the camera 10 and out through the avoidance hole 416 is configured to connect with backend devices and transmit optical image signal of the camera 10 to the backend. An end of the safety rope is connected to the camera 10, and another end of the safety rope is attached to a hanging hole of the mounting bracket 402 to protect the camera 10 from falling risk caused by impact or loosening of screws. In some embodiments, an indication region is provided in a top portion of the mounting portion, and is configured to indicate a mounting direction of the camera 10, which is convenient to identify forward and backward directions of the mounting base 401 on the mounting bracket 402. In some embodiments, a side wall of the mounting portion is recessed inwards, with an indent provided, and the indent may be an avoidance hole 416. The indent is configured to provide a receiving space to receive the safety rope and/or the cable 151 of the camera 10. In some embodiments, the sheet metal support 146 further includes a sheet metal front side wall 152. A rear side of the loudspeaker assembly 126 is fixed to the sheet metal front side wall 152, and a front side of the loudspeaker assembly 126 is fixed to the housing 101. In this way, the sheet metal front side wall 152 and the rear side of the loudspeaker assembly 126 form a sound chamber to reduce number of parts and simplify structure. In some embodiments, one of a third lens assembly, a radar assembly, a loudspeaker assembly, and a light supplement assembly, or any combination thereof is disposed in a housing of the base assembly 400. Therefore, the application range can be expanded, providing good potential for future extension. In some embodiments, the mounting bracket 402 includes a bracket body 417 and an adjusting part 418 connected to the bracket body 417, and the adjusting part 418 is rotatable relative to the bracket body 417 in the vertical plane. The mounting base 401 is mounted to the adjusting part 418. The adjusting part 418 can adjust a levelness of the mounting base 401, and in a process of the mounting base 401 being adjusted, when it is detected using the level 403 that the mounting base 401 is horizontal, the adjusting part 418 is adjusted to be horizontal. In this way, whether the mounting base 401 is horizontal is detected through the level 403, and when it is ensured that the mounting base 401 is horizontal, the camera 10 is assembled to the mounting base 401, thereby ensuring that the camera 10 is in a horizontal state. If it is detected that the level 403 is not in a horizontal state, the levelness of the mounting base 401 is adjusted through the adjusting part 418, and when the adjusting part 418 adjusts the mounting base 401 to the horizontal state, the camera 10 is mounted, thereby ensuring that the camera 10 is in the horizontal state. In the adjustment process, only the mounting base 401 is to be adjusted, without adjusting the camera 10 itself, which is simple and easy to operate, and avoids image deformation caused by repeated adjustment to the camera 10.

In some embodiments, the base assembly 400 further includes a second fixing member 419 extending in the horizontal direction, and when the adjusting part 418 is adjusted to be horizontal, the second fixing member 419 fixes the bracket body 417 and the adjusting part 418. By adjusting the second fixing member 419, the adjusting part 418 may be rotated relative to the bracket body vertically, so that the adjusting part 418 is adjusted to be in a horizontal state, which is simple and rapid to operate. In some embodiments, the base assembly 400 further includes a third fixing member 420 extending in the vertical direction. After the adjusting part 418 is adjusted in the vertical direction, the third fixing member 420 fixes the bracket body 417 and the adjusting part 418. By adjusting the third fixing member 420, the adjusting part 418 may be rotated relative to the bracket body 417 around the vertical direction to adjust the adjusting part 418 to horizontally rotate, so that the adjusting part 418 is adjusted to be in a horizontal state, which is simple and rapid to operate. The adjusting part 418 may be a pre-assembled plate. By adjusting the second fixing member 419 (vertical screw), the pre-assembled plate is horizontal. Then, after the camera 10 is mounted, screws on the rear of the pre-assembled plate are tightened. Finally, the third fixing member 420 is adjusted to adjust an orientation of the entire camera 10, and the third fixing member 420 (horizontal screw) is tightened. Horizontal adjustment through the third fixing member 420 is mainly to facilitate the mounting and fastening of two screws on the rear of the pre-assembled plate, avoiding inability to operate the two rear screws due to wall mounting.

In an actual adjustment process, after it is detected that the mounting base 401 is in a horizontal state by using the level 403, the mounting base 401 is fixed to the mounting bracket 402 by having fixing members (2 mounting screws) through base holes in the base body 404, and at this time, the fixing members may not be fully fixed or tightened. The level 403 is placed in the mounting groove 414. The horizontal state indicated by the level 403 is observed, and if the mounting base 401 is not horizontal, horizontal and vertical states of the adjusting part 418 of the mounting bracket 402 are adjusted through the second fixing member 419 and the third fixing member 420, until the adjusting part 418 is in the horizontal position. Finally, the camera 10 is pre-fixed through the snap 406 on the base body 404, and two mounting screws are aligned with and placed into base holes of the base body 404, then the mounting screws are tightened and fixed to mount the camera 10. Meanwhile, it is noted that the safety rope and/or the cable 151 are straightened and extend out of the avoidance hole 416 of the mounting base. In the above mounting process, the levelness of the mounting base 401 is mainly adjusted, and after the levelness of the mounting base 401 is adjusted, the camera 10 is mounted.

In some embodiments, a camera includes a camera body and a plurality of lens assemblies. The camera body includes a housing and a plurality of horizontal motors disposed in the housing. The plurality of lens assemblies may be transversely, horizontally, rotatably assembled below the camera body. A lens assembly includes a lens housing, a lens, a lens holder and a vertical motor. The lens holder may be longitudinally, vertically, rotatably disposed in the lens housing. The lens is assembled to the lens holder. The vertical motor is disposed in the lens housing, and is connected to the lens holder. The vertical motor is configured to drive the lens holder to rotate longitudinally vertically, so as to drive the lens to rotate longitudinally vertically relative to the lens housing. A top end of the lens housing is located in the housing, and is connected to a horizontal motor. The horizontal motor is configured to drive the lens assembly to rotate transversely horizontally relative to the camera body. In some embodiments, the lens includes a lens body, a fixing sheet metal member, and a lens circuit board. The lens circuit board is fixed to a rear end of the lens body through the fixing sheet metal part. In some embodiments, the lens assembly further includes a holder base fixed to the lens housing. The lens holder is rotatably connected to the holder base, and the lens holder may rotate longitudinally vertically relative to the holder base. In some embodiments, the holder base includes a rotating cavity opened downwards, and the lens holder and the lens are at least partially located in the rotating cavity. In some embodiments, holder transmission teeth are provided on an outer side of the lens holder, and the vertical motor is in transmission connection with the holder transmission teeth. In some embodiments, the lens holder includes a rotation connecting shaft, and the rotation connecting shaft is rotatably connected to the holder base. The lens holder includes opposite holder front end and holder rear end. The holder front end is closer to a front end of the lens than the holder rear end, the rotation connecting shaft is provided on an outer side of the holder front end, and the holder transmission gear are provided on an outer side of the holder rear end. In some embodiments, the holder transmission teeth are located on a lateral side of the lens holder, and the vertical motor is located on a side of the lens holder where the holder transmission teeth are disposed. In some embodiments, a bottom wall of the housing is provided with a mounting convex ring protruding upwards, the top end of the lens housing is provided with a rotating shaft portion protruding upwards, and the rotating shaft portion extends into the mounting convex ring from bottom to top. The camera further includes a bearing assembly and a sealing assembly, and the bearing assembly and the sealing assembly are assembled between the rotating shaft portion and the mounting convex ring. The camera body includes a transmission gear. The transmission gear is sleeved on an upper end of the rotating shaft portion, and is located above the bearing assembly. The horizontal motor is in transmission connection with the transmission gear, and is located on a transverse side of the transmission gear. In some embodiments, an arc-shaped limit groove is further provided on the bottom wall of the housing. The arc-shaped limit groove extends around the mounting convex ring. A surface of the lens housing is provided with a limit rib protruding upwards and extending into the limit groove. When the lens assembly horizontally rotates relative to the camera body, the limit rib slides in the limit groove. In some embodiments, a main control board is assembled to a bottom wall of the housing body, and there is a heat dissipation space between the main control board and the bottom wall of the housing body. In some embodiments, the housing includes a housing body disposed to transversely extend, and the plurality of lens assemblies are longitudinally assembled below the housing body. The camera body further includes a main control board, and the main control board is transversely mounted in the housing body. In some embodiments, the plurality of lens assemblies include a first lens assembly and a second lens assembly. The first lens assembly is located on a lateral end of the main control board, the second lens assembly is located on another lateral end of the main control board, and the first lens assembly and the second lens assembly are respectively electrically connected to the main control board. In some embodiments, an edge of the main control board is provided with an avoidance notch, and an avoidance space is provided between the avoidance notch and a side wall of the housing body. The camera includes a microphone electrically connected to the main control board, and the microphone is assembled in the avoidance space. The edge of the main control board is provided with a microphone connector, and the microphone connector is electrically connected to the microphone. In some embodiments, the edge of the main control board is provided with an external connector. The side wall of the housing body is provided with a card cover mounting opening for mounting a storage card cover, and the card cover mounting opening and the external connector are located on a same side of the main control board. In some embodiments, the bottom wall of the housing body is recessed downwards, with an expansion groove provided, and the expansion groove is located below the main control board, and is in communication with the heat dissipation space. In some embodiments, the housing includes an assembly housing connected below the expansion groove and longitudinally extending. The camera body further includes a loudspeaker assembly assembled in the assembly housing and a loudspeaker cable connected to the loudspeaker assembly. A bottom wall of the expansion groove is provided with a loudspeaker cable passing hole penetrating vertically, and the loudspeaker cable passes through the loudspeaker cable passing hole, and extends into the expansion groove to be electrically connected to the main control board. In some embodiments, the expansion groove is located in a transverse middle portion of the housing body. The plurality of lens assemblies include a first lens assembly and a second lens assembly, and the first lens assembly and the second lens assembly are respectively located on two transverse opposite sides of the expansion groove and the assembly housing. In some embodiments, the camera body further includes a cable connected to the main control board, and the bottom wall of the expansion groove is provided with a cable passing hole penetrating vertically. The cable passes downward through the cable passing hole, extends into the assembly housing, and extends from inside the assembly housing to outside the assembly housing. In some embodiments, a side wall of the expansion groove is provided with an airtight test hole, and the expansion groove is in communication with the outside through the airtight test hole. In some embodiments, a side of the main control board are provided with a convex ring avoidance hole, the mounting convex ring is stuck in the convex ring avoidance hole, and the horizontal motor is located on a side of the mounting convex ring facing away from the convex ring avoidance hole. In some embodiments, the main control board is provided with a photoelectric switch and a controller connected to the photoelectric switch. The transmission gear is provided with a photoelectric blocking piece, and the photoelectric blocking piece rotates relative to the photoelectric switch with the rotation of the transmission gear, and switches between a state of blocking the photoelectric switch and a state of not blocking the photoelectric switch with rotation. The controller is configured to determine a rotation angle of the transmission gear according to an electrical signal of the photoelectric switch. In some embodiments, the lens assembly further includes a front cover assembly disposed on a front side of the lens housing. The front cover assembly includes a front cover housing, a lamp panel, and window cover glass, and the window cover glass corresponds to the lens. The lamp panel and the window cover glass are transversely distributed in the front cover housing. In some embodiments, the camera further includes an expansion assembly transversely extending and disposed above the camera body and/or below the lens assembly. The expansion assembly includes at least one of a radio frequency communication assembly, a camera assembly, or a radar assembly. In some embodiments, the camera body further includes a first expansion circuit board, and the first expansion circuit board is assembled in the expansion groove. In some embodiments, the camera body further includes a second expansion circuit board, and the second expansion circuit board is located above and/or below the main control board.

In some embodiments, a camera includes a T-shaped camera body, a base assembly, a first lens assembly, and a second lens assembly. The T-shaped camera body includes a horizontal portion and a vertical portion. The base assembly supports the vertical portion, so that the camera can be horizontally mounted in a monitoring region. The first lens assembly and the second lens assembly hang below and are connected with the horizontal portion, and are symmetrically distributed on both sides of the base assembly. The horizontal portion includes a cavity transversely extending. A first horizontal transmission assembly and a second horizontal transmission assembly are symmetrically provided in the cavity. Under horizontal transmission forces generated by the first horizontal transmission assembly and the second horizontal transmission assembly, the first lens assembly and the second lens assembly may horizontally rotate about an axis parallel to the vertical portion relative to the T-shaped camera body. The first lens assembly includes a first lens housing, and a first lens assembly and a first vertical transmission assembly are provided in the first lens housing in a cavity-sharing manner. The second lens assembly includes a first lens housing, and a second lens assembly and a second vertical transmission assembly are provided in the first lens housing in a cavity-sharing manner. Under a vertical transmission force generated by the first vertical transmission assembly, the first lens assembly may pitch relative to the first lens housing and the T-shaped camera body. Under a vertical transmission force generated by the second vertical transmission assembly, the second lens assembly may pitch relative to the first lens housing and the T-shaped camera body. In some embodiments, a main control board is horizontally disposed in the cavity. A cable connected to the first lens assembly sequentially passes through the first lens housing, and a first communication hole in the horizontal portion that is in communication with the first lens housing, so as to be electrically connected to the main control board. A cable connected to the second lens assembly sequentially passes through the first lens housing, and a second communication hole in the horizontal portion that is in communication with the first lens housing, so as to be electrically connected to the main control board. In some embodiments, a center of the main control board is coaxial with a center of the vertical portion. In some embodiments, the main control board is disposed in the cavity to have an air gap between the main control board and a bottom surface of the horizontal portion. In some embodiments, a surface of the horizontal portion connected to the first lens assembly and the second lens assembly is provided with a first limit groove surrounding the first communication hole and a second limit groove surrounding the second communication hole. The first lens housing is provided with a first limit rib, and the second lens housing is provided with a second limit rib. The first limit groove receives the first limit rib, and the second limit groove receives the second limit rib. When the first lens assembly and the second lens assembly move horizontally, the first limit rib slides in the first limit groove, and the second limit rib slides in the second limit groove. Radians of the first limit groove and the second limit groove respectively constrain horizontal rotation angles of the first lens assembly and the second lens assembly. In some embodiments, the first limit rib and the second limit rib are respectively a first protrusion portion facing toward the first limit groove and a second protrusion portion facing toward the second limit groove. In some embodiments, cables connected to the main control board sequentially passes through the vertical portion and the base assembly, so as to be connected to an external power supply. In some embodiments, the horizontal portion is provided with a threading hole for passing through cables of the main control board, and the threading hole is provided at an edge position of the horizontal portion. In some embodiments, both ends of the main control board near the first horizontal transmission assembly and the second horizontal transmission assembly have a notch formed by extending inward along a length direction of the main control board, so that outer walls of the first communication hole and the second communication hole are adjacent to the main control board. In some embodiments, the notches are arc-shaped. In some embodiments, the main control board is provided in the vicinity of the notches with terminals for being electrically connected to the first lens assembly and the second lens assembly. In some embodiments, one of a third lens assembly, a radar assembly, a loudspeaker assembly, and a light supplement assembly, or any combination thereof is disposed in a housing of the base assembly.

In some embodiments, a camera includes a camera body and a lens assembly. The camera body includes a housing transversely extending and a main control board disposed in the housing. The housing includes a first receiving cavity transversely extending, and the main control board is located in the first receiving cavity. The lens assembly is longitudinally located below the camera body. A top end of the lens assembly is located in the first receiving cavity, and is rotatably connected to the housing. The lens assembly includes a lens housing, an electrical control assembly disposed in the lens housing, and a cable connecting the electrical control assembly and the main control board. The electrical control assembly includes a lens. The lens housing includes a second receiving cavity for receiving the lens. A communication hole is provided above the lens housing, and the communication hole communicates the first receiving cavity and the second receiving cavity. The cable extends upward from the second receiving cavity, passes through the communication hole, extends into the first receiving cavity, and is electrically connected to the main control board. In some embodiments, the lens assembly further includes a lens holder, and the lens is assembled to the lens holder. The lens holder includes a holder body and a wire harness clip retainer disposed to the holder body. The cable includes a lens cable connecting the lens and the main control board, and the lens cable is constrained in the wire harness clip retainer. In some embodiments, the lens holder is rotatably connected to the lens housing in a vertical plane. The electrical control assembly further includes a vertical motor, and the vertical motor is connected to the lens holder, and is configured to drive the lens holder to rotate. The cable includes a motor cable connecting the vertical motor and the main control board, and the motor cable is constrained in the wire harness clip retainer. In some embodiments, the lens assembly further includes a front cover, and the front cover is assembled to the lens housing, and is located in front of the lens. The electrical control assembly includes a lamp panel located in the front cover. The cable includes a lamp panel cable connecting the lamp panel and the main control board, and the lamp panel cable is constrained in the wire harness clip retainer. In some embodiments, the electrical control assembly includes window cover glass disposed to the front cover. The cable includes a heating glass cable connecting the window cover glass and the main control board, and the heating glass cable is constrained in the wire harness clip retainer. In some embodiments, the wire harness clip retainer is disposed to protrude above the holder body. The wire harness clip retainer includes a first clip ring and a second clip ring disposed to protrude from a top portion of the first clip ring. The first clip ring and the second clip ring are interconnected vertically, and the cable sequentially passes through the first clip ring and the second clip ring from bottom to top, and extends into the communication hole. In some embodiments, the wire harness clip retainer is located below the communication hole. In some embodiments, the wire harness clip retainer extends into the communication hole. In some embodiments, a height of the second clip ring is larger than a height of the first clip ring. In some embodiments, an inner diameter of the first clip ring is greater than an inner diameter of the second clip ring. In some embodiments, the camera body further includes a baffle assembly. The baffle assembly is disposed in the housing, and the baffle assembly is provided with a threading hole that is in communication with the communication hole and penetrates vertically. The cable sequentially passes through the communication hole and the threading hole, extends toward the main control board above the baffle assembly, and is connected to the main control board. In some embodiments, an upper surface of the baffle assembly is provided with a plurality of limit clips, the lens assembly includes a plurality of cables, and the plurality of cables are clipped to the plurality of limit clips. At least two of the plurality of limit clips are distributed at intervals along a circumference of the threading hole, and at least two of the plurality of cables are dispersed at the circumference of the threading hole, and are clipped to different limit clips. In some embodiments, the camera further includes a horizontal motor and a transmission gear connected to the horizontal motor. The transmission gear is connected to the lens assembly, and the horizontal motor is configured to drive the lens assembly to horizontally rotate. The baffle assembly is located above the transmission gear, and covers at least a portion of the transmission gear. In some embodiments, a side wall of the threading hole extends downward from a top wall of the baffle assembly, and is aligned with the communication hole, the transmission gear is located outside the side wall of the threading hole. In some embodiments, the main control board transversely extends in the first receiving cavity. The baffle assembly is located at a lateral end of the main control board, and the baffle assembly is located above the main control board.

In some embodiments, a camera includes a camera body, a first lens assembly and a baffle assembly. A first horizontal transmission assembly and a main control board are provided in the camera body in a cavity-sharing manner. The main control board is horizontally disposed in the camera body, and the camera body is provided with a communication hole. The first lens assembly is connected to the camera body through the communication hole, and the first lens assembly may horizontally rotate under a driving force of the first horizontal transmission assembly. The first lens assembly includes a first lens. The first horizontal transmission assembly includes a horizontal motor and a horizontal rotating gear. The horizontal motor is disposed near a housing wall of the camera body, and the horizontal rotating gear is coaxial with the communication hole. The baffle assembly is disposed in the camera body, and the baffle assembly includes an arc-shaped side wall. The arc-shaped side wall is disposed to cover the horizontal rotating gear and avoid the horizontal motor. An end of the main control board near the baffle assembly is provided with a notch recessed inward along a length direction of the main control board, and the shape of the notch matches with the arc-shaped side wall. The camera is configured such that: a cable electrically connected to the first lens, after passing through the communication hole, the horizontal transmission gear, and the baffle assembly, may be electrically connected to the main control board. In some embodiments, the first lens assembly includes a first lens housing, a first lens assembly and a first vertical transmission assembly are provided in the first lens housing in a cavity-sharing manner, and the first vertical transmission assembly may drive the first lens to pitch relative to the first lens housing. In some embodiments, the first lens housing includes a lens housing body and a rotating shaft portion disposed on the lens housing body. The camera further includes a bearing assembly and a sealing assembly. The bearing assembly and the sealing assembly are assembled to the rotating shaft portion, and are located below the horizontal rotating gear. The rotating shaft portion is assembled with the horizontal rotating gear through the sealing assembly and the bearing assembly, and when the first lens assembly horizontally rotates, an inner ring of the bearing assembly rotates together with the rotating shaft portion and the transmission gear with the tightening fixation of the rotating shaft portion and the transmission gear, and an outer ring of the bearing assembly and the camera body do not rotate. In some embodiments, a seal mounting step is provided at a circumference of the rotating shaft portion, and the sealing assembly is limit assembled with the seal mounting step. An inner wall of the communication hole is provided with a bearing mounting step, and the bearing assembly is assembled above the sealing assembly, and is in limit fit with the bearing mounting step. In some embodiments, the baffle assembly is located at a transverse end of the main control board, the baffle assembly is located above the main control board, and the baffle assembly is located above the transmission gear and covers at least a portion of the transmission gear. In some embodiments, the baffle assembly extends downwards, with a plurality of limit parts disposed to protrude. The main control board is provided with a plurality of limit grooves corresponding to positions of the limit parts. The baffle assembly is fixed on the main control board through limit mating of the plurality of limit parts and the plurality of limit grooves. In some embodiments, a side wall of the communication hole extends downward from a top wall of the baffle assembly, and the transmission gear is located outside the side wall of the communication hole. In some embodiments, in a horizontal direction, a side of the baffle assembly relatively close to the horizontal motor is fractured, and a side of the baffle assembly relatively away from the horizontal motor is an arc surface. In some embodiments, the camera includes a plurality of cables electrically connected to the first lens, an upper surface of the baffle assembly is provided with a plurality of limit clips, and the plurality of cables are buckled to the plurality of limit clips. In some embodiments, the first lens assembly further includes a first holder base, and the first holder base is provided with a wire harness structure. The wire harness structure includes a wire harness hole penetrating vertically. The cables pass through the wire harness hole from bottom to top to extend into the communication hole. In some embodiments, a hole center of the wire harness hole is disposed coaxially with a hole center of the communication hole.

In some embodiments, a camera includes a camera body and a lens assembly. The lens assembly is rotatably assembled below the camera body, and includes a lens housing and a lens assembled in the lens housing. The lens housing includes a lens housing body and a housing upper cover assembled to a top portion of the lens housing body. The lens housing body is provided with a receiving cavity for receiving the lens. A cavity opening is provided above the receiving cavity. The housing upper cover includes a cover body and a rotating shaft portion extending upward from the cover body. The cover body covers the cavity opening. The rotating shaft portion is embedded into the camera body, and is rotatably connected to the camera body. The camera body covers the cover body from above the cover body. In some embodiments, the cover body is embedded into the cavity opening, and an upper surface of the cover body is lower than or flush with an upper edge of the cavity opening. In some embodiments, the top portion of the lens housing body is provided with a step facing upwards and a body flange protruding upward from the periphery of the step, and the step and the body flange surround the cavity opening. An edge of the cover body extends downwards, with a cover body flange provided. The cover body flange is located on an inner side of the body flange, and is in limit fit with the body flange at a circumference of the cavity opening, and the cover body flange is pressed downward against the step. In some embodiments, the lens assembly further includes a seal member, and the seal member seals between the cover body flange and the step. The step is provided with a seal groove recessed downwards. The seal member includes a clamping portion sandwiched between the cover body flange and the step. The clamping portion covers above the seal groove. The body flange is provided with a drain hole in communication with the seal groove. The drain hole is lower than the clamping portion. In some embodiments, a first fixing post fixedly connected to the cover body is disposed to protrude upwards in the seal groove. The first fixing post is located between the seal member and the body flange. A drain space is provided between the first fixing post and the body flange. The drain hole is disposed corresponding to the drain space. In some embodiments, an outer side of the lens housing body is recessed inwards, with an artistic groove provided, and the drain hole is located in the artistic groove. In some embodiments, the lens housing may rotate relative to the camera body in a horizontal direction. Its relative position to the camera body in a vertical direction remains unchanged. In some embodiments, the lens housing body is a plastic part, and the housing upper cover is a metal part. In some embodiments, the lens assembly further includes a front cover assembly disposed on a front side of the lens housing body, and the front cover assembly includes a front cover housing, a lamp panel, a lamp assembly and window cover glass. The lamp panel, the lamp assembly and the window cover glass are assembled in the front cover housing. The front cover housing is a metal part. The lamp panel, the lamp assembly and the window cover glass conduct heat through inner walls and side walls of the front cover housing. In some embodiments, the lens assembly further includes a lens holder, and a lens body is assembled to the lens holder. A plurality of second fixing posts are disposed in the receiving cavity, and the lens holder is assembled with the lens housing body through the plurality of second fixing posts. In some embodiments, the lens assembly further includes a front cover assembly assembled to the front side of the lens housing body. A plurality of third fixing holes is provided on the front side of the lens housing body, and the front cover assembly is assembled with the lens housing body through the plurality of third fixing holes.

In some embodiments, a camera includes a camera body, a first lens assembly and a second lens assembly. A first horizontal transmission assembly and a second horizontal transmission assembly are provided in the camera body in a cavity-sharing manner. The first lens assembly and the second lens assembly are respectively in contact with the camera body. The first lens assembly may horizontally rotate under a driving force of the first horizontal transmission assembly. The second lens assembly may horizontally rotate under a driving force of the second horizontal transmission assembly. The first lens assembly includes a first lens housing, and a first lens assembly and a first vertical transmission assembly are provided in the first lens housing in a cavity-sharing manner. The second lens assembly includes a first lens housing, and a second lens assembly and a second vertical transmission assembly are provided in the first lens housing in a cavity-sharing manner. The first lens may pitch relative to the first lens housing under a driving force of the first vertical transmission assembly. The second lens may pitch relative to the first lens housing under a driving force of the second vertical transmission assembly. The first lens housing includes a housing upper cover and an integrally injection molded lens housing body. The housing upper cover includes a planar portion and a protrusion longitudinally extending. The protrusion is connected to a rotating shaft of the camera body. In some embodiments, an edge of the lens housing body extends upwards, with a body flange provided. An edge of the planar portion extends downwards, with a cover body flange provided. The cover body flange is located on an inner side of the body flange, and the cover body flange is limit stuck to the body flange at a circumference of the lens housing body. In some embodiments, a top portion of the lens housing body is provided with a seal groove opened upwards, and the seal groove is disposed on the inner side of the body flange. The camera further includes a seal member, and the seal member seals between the cover body flange and the seal groove. In some embodiments, the seal member includes a horizontal portion and a vertical portion connected to the horizontal portion. The horizontal portion is sandwiched between the cover body flange and a top portion of the seal groove, and abuts against the body flange at the circumference of the body flange to cover an opening of the seal groove. The vertical portion is located on a side wall of the seal groove, and abuts against the side wall of the seal groove at the circumference of the seal groove. In some embodiments, the body flange is provided with a drain hole in communication with the seal groove. The drain hole is lower than the horizontal portion. In some embodiments, a first fixing post fixedly connected to the housing upper cover is disposed to protrude upwards in the seal groove. The first fixing post is located between the seal member and the body flange, and a drain space is provided between the first fixing post and the body flange. The drain hole is disposed corresponding to the drain space. In some embodiments, an outer side of the lens housing body is recessed inwards, with an artistic groove provided, and the drain hole is located in the artistic groove. In some embodiments, the camera further includes a bearing assembly and a sealing assembly, and the bearing assembly and the sealing assembly are assembled to the protrusion. The camera body includes a horizontal transmission gear. The horizontal transmission gear is sleeved on an upper end of the protrusion, and is located above the bearing assembly. The first horizontal transmission assembly is in transmission connection with the horizontal transmission gear. In some embodiments, a bottom wall of the camera body is provided with a mounting convex ring protruding upwards, and the protrusion extends into the mounting convex ring from bottom to top. In some embodiments, a seal mounting step is provided at a circumference of the protrusion, and the sealing assembly is limit assembled with the seal mounting step. An inner wall of the mounting convex ring is provided with a bearing mounting step. The bearing assembly is assembled above the sealing assembly, and is in limit fit with the bearing mounting step.

In some embodiments, a camera includes a mounting bracket, a mounting base, a camera and a level. The mounting base is assembled to the mounting bracket, and can be adjusted in a vertical plane relative to the mounting bracket. The camera is assembled to the mounting base. The level is disposed to the mounting base. The level is configured to, when the mounting base is adjusted relative to the mounting bracket in the vertical plane, detect whether the mounting base is horizontal. When the level is horizontal, the mounting base is fixed to the mounting bracket, so that the camera is horizontal. In some embodiments, the mounting base includes a base body and a mounting portion disposed at an end of the base body. The camera includes a bottom wall of the camera and a side wall of the camera. The bottom wall of the camera abuts against and limits the base body in the vertical direction, and the side wall of the camera abuts against and limits a side wall of the mounting portion in a horizontal direction. In some embodiments, a snap is disposed to protrude from the base body. A through hole fitting the snap is provided in the bottom wall of the camera. The snap passes through the through hole from below the through hole, and contacts and is stuck with an upper wall of the through hole. In some embodiments, the camera includes a camera body, a housing connected to the camera body, and a sheet metal support disposed in the housing. The sheet metal support is assembled with the camera body. A first through hole is provided in a bottom portion of the housing, a second through hole corresponding to a position of the first through hole is provided in a bottom portion of the sheet metal support, and the snap passes through the first through hole and the second through hole and contacts and is stuck to an inner bottom wall of the sheet metal support. In some embodiments, the sheet metal support includes a sheet metal bottom wall and a sheet metal rear side wall connected to the sheet metal bottom wall. In some embodiments, the sheet metal bottom wall covers the level. In some embodiments, the side wall of the mounting portion abuts against the back of the sheet metal rear side wall. The second through hole is disposed in the sheet metal bottom wall. The snap includes a snap extension portion extending upward from the base body and a snap head portion disposed on an upper end of the snap extension portion. The snap head portion extends toward a direction away from the sheet metal rear side wall, and is stuck above the second through hole. In some embodiments, the mounting portion is provided with a first mounting hole. A second mounting hole corresponding to a position of the first mounting hole is provided in the sheet metal rear side wall. The camera further includes a first fixing member, and the first fixing member passes through the first mounting hole and the second mounting hole to fix the sheet metal rear side wall and the mounting portion. In some embodiments, the base body is recessed downwards, with a mounting groove provided. The level is disposed in the mounting groove, and the mounting groove is located in a middle region of the base body. In some embodiments, the base body is provided with at least one drain hole penetrating vertically. In some embodiments, the camera device further includes a safety rope and/or a cable connected to the camera. An avoidance hole is provided on a side of the mounting portion facing away from the base body. The safety rope and/or the cable extends from the camera through the avoidance hole. In some embodiments, an indication region is provided in a top portion of the mounting portion, and is configured to indicate a mounting direction of the camera. In some embodiments, the mounting bracket includes a bracket body and an adjusting part connected to the bracket body, and the adjusting part is rotatable relative to the bracket body in the vertical plane. The mounting base is mounted to the adjusting part. In a process of the adjusting part being adjusted, when the level detects that the mounting base is horizontal, the adjusting part is adjusted to be horizontal. In some embodiments, the camera further includes a second fixing member extending in the horizontal direction, and when the adjusting part is adjusted to be horizontal, the second fixing member fixes the bracket body and the adjusting part. In some embodiments, the adjusting part is rotatable relative to the bracket body in the vertical direction. The camera further includes a third fixing member extending in the vertical direction. After the adjusting part is adjusted in the vertical direction, the third fixing member fixes the bracket body and the adjusting part. In some embodiments, the camera includes a camera body, a housing connected to the camera body, and a sheet metal support disposed in the housing. The sheet metal support is assembled with the camera body. The sheet metal support includes a sheet metal front side wall. The camera further includes a loudspeaker assembly. A rear side of the loudspeaker assembly is fixed to the sheet metal front side wall, and a front side of the loudspeaker assembly is fixed to the housing.

In some embodiments, a camera includes a camera body, a base assembly, a first lens assembly, a second lens assembly, a mounting base, and a mounting bracket. A first horizontal transmission assembly and a second horizontal transmission assembly are provided in the camera body in a cavity-sharing manner. The base assembly supports the camera body. The first lens assembly and the second lens assembly, the first lens assembly and the second lens assembly are in contact with the camera body, and are distributed on both sides of the base assembly. The first lens assembly may horizontally rotate under a driving force of the first horizontal transmission assembly. The second lens assembly may horizontally rotate under a driving force of the second horizontal transmission assembly. The first lens assembly includes a first lens housing, and a first lens assembly and a first vertical transmission assembly are provided in the first lens housing in a cavity-sharing manner. The second lens assembly includes a second lens housing, and a second lens assembly and a second vertical transmission assembly are provided in the second lens housing in a cavity-sharing manner. The first lens may pitch relative to the first lens housing under a driving force of the first vertical transmission assembly. The second lens may pitch relative to the first lens housing under a driving force of the second vertical transmission assembly. The mounting base includes a base body and a mounting portion extending toward a base. The base body is snap-fit connected to a bottom wall of the base assembly in a longitudinal direction, and the mounting portion is fixedly connected to a side wall of the base assembly in a horizontal direction. The mounting bracket is fixedly connected to the mounting base in the longitudinal direction. In some embodiments, a side wall of the camera is recessed inwards to form a cut, and the cut is in limit fit with the mounting portion in the horizontal direction. The base assembly is provided with a base hole. The camera further includes a fixing member, and the fixing member is disposed to pass through the mounting portion in the horizontal direction, and is fixed to the base hole. In some embodiments, a snap is disposed to protrude from the base body. A through hole fitting the snap is provided in a bottom wall of the camera, and the snap passes through the through hole from below the through hole, and contacts and is stuck with an upper wall of the through hole. In some embodiments, the snap includes a snap extension portion extending upward from the base body and a snap head portion disposed on an upper end of the snap extension portion, the snap head portion extends toward a direction away from the side wall of the base assembly, and is stuck above the through hole. In some embodiments, a sheet metal support is disposed in a cavity of the base assembly, and the sheet metal support is fixedly connected to the camera body. In some embodiments, the sheet metal support includes sheet metal sidewalls and a U-shaped portion, and the U-shaped portion is disposed in a space enclosed by the sheet metal sidewalls. A first through hole is provided in a bottom portion of the base assembly, and a second through hole corresponding to the position of the first through hole is provided in a bottom portion of the U-shaped portion. The snap passes through the first through hole and the second through hole, and is stuck to an inner bottom wall of the U-shaped portion. In some embodiments, the camera further includes a level, and the level is disposed to the base assembly. The level is configured to, when the base assembly is adjusted relative to the mounting bracket in a vertical plane, detect whether the base assembly is horizontal. When the level is horizontal, the base assembly is fixed to the mounting bracket, so that the camera is horizontal. In some embodiments, the base body is recessed downwards, with a mounting groove provided, the level is disposed in the mounting groove, and the mounting groove is located in a middle region of the base body. In some embodiments, a side wall of the mounting portion is recessed inwards, with an indent provided, and the indent is configured to receive a cable of the camera. In some embodiments, one of a third lens assembly, a radar assembly, a loudspeaker assembly, and a light supplement assembly, or any combination thereof is disposed in the base assembly.

The above are only preferred embodiments of the present application, which are not intended to limit the application. Any modification, equivalent replacement, improvement, etc. made within the spirit and principle of the present application shall be included in the protection scope of the application.

## Claims

1. A camera (10), comprising:
a T-shaped camera body (100) comprising a horizontal portion and a vertical portion;
a base assembly (400), wherein the base assembly supports the vertical portion, so that the camera is horizontally mounted in a monitoring region;
a first lens assembly (201) and a second lens assembly (202), wherein the first lens assembly and the second lens assembly hang below and are connected with the horizontal portion, and are symmetrically distributed on both sides of the base assembly,
wherein the horizontal portion comprises a cavity transversely extending, and a first horizontal transmission assembly (109) and a second horizontal transmission assembly (110) are symmetrically provided in the cavity; under a horizontal transmission force generated by the first horizontal transmission assembly, the first lens assembly rotates horizontally about an axis parallel to the vertical portion relative to the T-shaped camera body, and under a horizontal transmission force generated by the second horizontal transmission assembly, the second lens assembly rotates horizontally about an axis parallel to the vertical portion relative to the T-shaped camera body;
the first lens assembly comprises a first lens housing, and a first lens and a first vertical transmission assembly are provided in the first lens housing in a cavity-sharing manner; the second lens assembly comprises a second lens housing, and a second lens and a second vertical transmission assembly are provided in the second lens housing in a cavity-sharing manner;
under a vertical transmission force generated by the first vertical transmission assembly, the first lens pitches relative to the first lens housing and the T-shaped camera body, and under a vertical transmission force generated by the second vertical transmission assembly, the second lens pitches relative to the second lens housing and the T-shaped camera body.

2. The camera according to claim 1, wherein the first horizontal transmission assembly and the second horizontal transmission assembly respectively comprise a horizontal motor (104) and a transmission gear (105).

3. The camera according to claim 1 or 2, wherein the first lens housing is provided with a first lens holder longitudinally and vertically rotatably disposed in the first lens housing, the first lens is mounted to the first lens holder, and the first vertical transmission assembly comprises a first vertical motor for driving the first lens holder to pitch relative to the first lens housing and the T-shaped camera body;
the second lens housing is provided with a second lens holder longitudinally and vertically rotatably disposed in the second lens housing, the second lens is mounted to the second lens holder, and the second vertical transmission assembly comprises a second vertical motor for driving the second lens holder to pitch relative to the second lens housing and the T-shaped camera body.

4. The camera according to claim 3, wherein a first holder base fixed to the first lens housing is disposed in the first lens housing; the first lens holder is rotatably connected to the first holder base, and is rotatable vertically relative to the first holder base; first holder transmission teeth are disposed on an outer side of the first lens holder, and the first vertical motor is in transmission connection with the first holder transmission teeth;
a second holder base fixed to the second lens housing is disposed in the second lens housing; the second lens holder is rotatably connected to the second holder base, and is rotatable vertically relative to the second holder base; second holder transmission teeth are disposed on an outer side of the second lens holder, and the second vertical motor is in transmission connection with the second holder transmission teeth.

5. The camera according to any one of claims 1 to 4, wherein a main control board (102) is horizontally disposed in the cavity; a cable connected to the first lens assembly sequentially passes through the first lens housing, and a first communication hole (123) in the horizontal portion that is in communication with the first lens housing and then is electrically connected to the main control board, and a cable connected to the second lens assembly sequentially passes through the second lens housing, and a second communication hole (124) in the horizontal portion that is in communication with the second lens housing and then is electrically connected to the main control board.

6. The camera according to claim 5, wherein a center of the main control board is coaxial with a center of the vertical portion.

7. The camera according to claim 5 or 6, wherein the cables connected to the main control board sequentially pass through the vertical portion and the base assembly and then are connected to an external power supply.

8. The camera according to any one of claims 5 to 7, wherein both ends of the main control board near the first horizontal transmission assembly and the second horizontal transmission assembly respectively have a notch (130) formed by extending inward along a length direction of the main control board, so that outer walls of the first communication hole and the second communication hole are adjacent to the main control board.

9. The camera according to claim 8, wherein the notches are arc-shaped.

10. The camera according to claim 8 or 9, wherein the main control board is provided in a vicinity of the notches with terminals (132) for being electrically connected to the first lens assembly and the second lens assembly respectively.

11. The camera according to any one of claims 5 to 10, wherein the main control board is disposed in the cavity to have an air gap between the main control board and a bottom surface of the horizontal portion connected to the first lens assembly and the second lens assembly.

12. The camera according to claim 8, wherein the horizontal portion is provided with a threading hole (139) for the cables of the main control board to pass through, and the threading hole is provided at an edge position of the horizontal portion.

13. The camera according to claim 8, wherein a surface of the horizontal portion connected with the first lens assembly and the second lens assembly is provided with a first limit groove (121) surrounding the first communication hole and a second limit groove (122) surrounding the second communication hole;
the first lens housing is provided with a first limit rib, and the second lens housing is provided with a second limit rib; the first limit groove receives the first limit rib, and the second limit groove receives the second limit rib;
when the first lens assembly moves horizontally, the first limit rib slides along the first limit groove, and when the second lens assembly moves horizontally, the second limit rib slides along the second limit groove; radians of the first limit groove and the second limit groove respectively constrain horizontal rotation angles of the first lens assembly and the second lens assembly.

14. The camera according to claim 13, wherein the first limit rib and the second limit rib are respectively a first protrusion portion facing toward the first limit groove and a second protrusion portion facing toward the second limit groove.

15. The camera according to any one of claims 1 to 14, wherein one of a third lens assembly, a radar assembly, a loudspeaker assembly, and a light supplement assembly, or any combination thereof is disposed in a housing of the base assembly.

16. The camera according to claim 5, wherein the main control board is provided with a photoelectric switch (136) and a controller connected to the photoelectric switch; the transmission gear is provided with a photoelectric blocking piece (137), and the photoelectric blocking piece rotates relative to the photoelectric switch with rotation of the transmission gear, and switches between a state of blocking the photoelectric switch and a state of not blocking the photoelectric switch with rotation;
the controller is configured to determine a rotation angle of the transmission gear according to an electrical signal of the photoelectric switch.

17. The camera according to any one of claims 1 to 16, wherein the camera further comprises an expansion assembly (300) transversely extending and disposed above the camera body and/or below the lens assembly;
the expansion assembly comprises at least one of a radio frequency communication assembly, an imaging assembly, or a radar assembly.

18. The camera according to any one of claims 5 to 11, wherein an edge of the main control board is provided with an avoidance notch (131), and an avoidance space is formed between the avoidance notch and a side wall of the T-shaped camera body;
the camera comprises a microphone electrically connected to the main control board, and the microphone is assembled in the avoidance space; the edge of the main control board is provided with a microphone connector (133), and the microphone connector is electrically connected to the microphone.

19. The camera according to claim 5, wherein a bottom wall of the cavity is recessed downwards, with an expansion groove (111) provided, and the expansion groove is located below the main control board;
the camera further comprises a first expansion circuit board (301), and the first expansion circuit board is assembled in the expansion groove.

20. The camera according to claim 19, wherein the camera further comprises a second expansion circuit board (302), and the second expansion circuit board is located above and/or below the main control board.
